(19) Europäisches Patentamt / European Patent Office / Office européen des brevets

(11) **EP 2 152 758 B1**

(12) **EUROPÄISCHE PATENTSCHRIFT**


(45) Veröffentlichungstag und Bekanntmachung des Hinweises auf die Patenterteilung:
**26.09.2012 Patentblatt 2012/39**

(21) Anmeldenummer: **08750338.9**

(22) Anmeldetag: **19.05.2008**

(51) Int Cl.:
***C08C 1/14** (2006.01)* ***C08C 1/15** (2006.01)*
***C08F 6/14** (2006.01)* ***C08L 9/02** (2006.01)*

(86) Internationale Anmeldenummer:
**PCT/EP2008/056098**

(87) Internationale Veröffentlichungsnummer:
**WO 2008/142039 (27.11.2008 Gazette 2008/48)**


(54) **NITRILKAUTSCHUKE**

NITRILE RUBBERS

CAOUTCHOUCS NITRILE


(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.05.2007 DE 102007024010**

(43) Veröffentlichungstag der Anmeldung:
**17.02.2010 Patentblatt 2010/07**



(73) Patentinhaber: **LANXESS Deutschland GmbH**
**51369 Leverkusen (DE)**

(72) Erfinder: **OBRECHT, Werner**
**47447 Moers (DE)**



(56) Entgegenhaltungen:
**GB-A- 785 631** **GB-A- 888 040**
**US-A- 4 383 108**


Bemerkungen:
Die Akte enthält technische Angaben, die nach dem Eingang der Anmeldung eingereicht wurden und die nicht in dieser Patentschrift enthalten sind.

EP 2 152 758 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).


Printed by Jouve, 75001 PARIS (FR)

## Beschreibung

Die Erfindung betrifft einen Nitrilkautschuk, ein Verfahren zu dessen Herstellung, vulkanisierbare Mischungen auf Basis dieses Nitrilkautschuks, ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und gegebenenfalls einem oder mehreren weiteren copolymerisierbaren Monomeren handelt.

Derartige Nitrilkautschuke und Verfahren zur Herstellung solcher Nitrilkautschuke sind bekannt, siehe z.B. W. Hofmann, Rubber Chem. Technol. 36 (1963) 1 und Ullmann's Encyclopedia of Industrial Chemistry, VCH Verlagsgesellschaft, Weinheim, 1993, S. 255-261. In diesen Publikationen findet sich kein Hinweis, ob und gegebenfalls wie man die Vulkanisationsgeschwindigkeit solcher Kautschuke und das Eigenschaftsprofil, insbesondere das Niveau des Moduls beeinflussen kann.

NBR wird durch Emulsionspolymerisation hergestellt, wobei zunächst ein NBR-Latex erhalten wird. Der NBR-Feststoff wird aus diesem Latex durch Koagulation isoliert. Für die Koagulation werden Salze und Säuren verwendet. Über die Koagulation von Latices mit Metallsalzen ist bekannt, dass von einwertigen Metallionen, z.B. in Form von Natriumchlorid, deutlich größere Elektrolytmengen benötigt werden als von mehrwertigen Metallionen, z.B. in Form von Calciumchlorid, Magnesiumchlorid oder Aluminiumsulfat (Kolloid-Z. 154, 154 (1957)). Es ist ferner bekannt, dass der Einsatz mehrwertiger Metallionen zu "einem mehr oder weniger großen Einschluss des Emulgators im Produkt" führt (Houben-Weyl (1961), Methoden der Org. Chemie, Makromolekulare Stoffe 1, S. 484). Gemäß Houben-Weyl (1961), Methoden der Org. Chemie, Makromolekulare Stoffe 1, S. 479 "müssen nicht nur die benutzten Elektrolyte sehr sorgfältig wieder ausgewaschen werden, sondern das Fertigprodukt soll auch frei von den Katalysatoren und Emulgatoren des Ansatzes sein. Schon geringe Reste von Elektrolyten ergeben trübe und wolkige Press- und Spritzstücke, verderben die elektrischen Eigenschaften und erhöhen das Wasseraufnahmevermögen des Fertigprodukts" (Zitat). Im Houben-Weyl findet sich kein Hinweis, wie ein Latex aufgearbeitet werden muss, um Nitrilkautschuke zu erhalten, die schnell vulkanisieren und nach der Vulkanisation ein hohes Modulniveau aufweisen.

Aus DD 154 702 ist ein Verfahren zur radikalischen Copolymerisation von Butadien und Acrylnitril in Emulsion bekannt, das über ein spezielles, zweckmäßigerweise computergestütztes Dosierprogramm für die Monomere sowie den Molekulargewichtsregler, wie z.B. tert.Dodecylmercaptan, gesteuert wird und bei dem die erhaltenen Latices durch Koagulation im sauren Medium zum festkautschuk aufgearbeitet werden. Als wesentlicher Vorteil des Verfahrens wird ausgeführt, dass die als Emulgatoren eingesetzten Harz- und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch ausgewaschenen Emulgator reklamiert. Für die erhaltenen Butadien-Acrylnitril-Copolymerisate mit 10-30 Gew.% Acrylnitril wird ausgeführt, dass sie sich durch gute Elastizitäts- und Tieftemperatur-Eigenschaften kombiniert mit einer erhöhten Quellbestandigkeit und eine vorteilhafte Verarbeitbarkeit auszeichnen. Maßnahmen, durch die eine Beeinflussung der Vulkanisationsgeschwindigkeit des Nitrilkautschuks sowie des Eigenschaftsprofils des vulkanisierten NBR möglich ist, können der Lehre dieses Patents nicht entnommen werden.

Aus JP 27902/73 (Appl. 69 32,322) ist bekannt, dass durch die Verwendung von Aminen bei der Koagulation von Latices mit Magnesiumsalzen, beispielsweise durch Kombination von Diethylentriamin und Magnesiumchlorid, die Anvulkanisationsgeschwindigkeit reduziert und somit die Scorchbeständigkeit von Nitrilkautschuken verbessert werden kann. Weitergehende Hinweise sind aus diesem Stand der Technik nicht zu entnehmen.

Aus der DE-OS 23 32 096 ist es bekannt, dass Kautschuke aus ihren wässrigen Dispersionen mit Hilfe von Methylcellulose und einem wasserlöslichen Alkali-, Erdalkali-, Aluminium- oder Zinksalz ausgefällt werden können. Als bevorzugtes wasserlösliches Salz wird Natriumchlorid eingesetzt. Als Vorteil dieses Verfahrens wird beschrieben, dass ein Koagulat erhalten wird, welches von Fremdbestandteilen, wie Emulgatoren, Katalysatorresten und dergleichen fast vollständig frei ist, da diese Fremdstoffe zusammen mit dem Wasser beim Abtrennen des Koagulats entfernt und etwa noch verbleibende Reste mit weiterem Wasser vollständig ausgewaschen werden. Aussagen zum Vulkanisationverhalten derart hergestellter Kautschuke werden nicht getroffen. In DE-OS 24 25 441 werden bei der Elektrolytkoagulation von Kautschuklatices als Hilfsmittel statt der Methylcellulose 0,1-10 Gew.% (bezogen auf den Kautschuk) wasserlösliche $C_2$-$C_4$ Alkylcellulosen oder Hydroxyalkylcellulosen in Kombination mit 0,02 bis 10 Gew.% (bezogen auf den Kautschuk) eines wasserlöslichen Alkali-, Erdalkali-, Aluminium- oder Zinksalzes verwendet. Auch hier wird als bevorzugtes wasserlösliches Salz Natriumchlorid eingesetzt. Das Koagulat wird mechanisch abgetrennt, gegebenenfalls mit Wasser gewaschen und das restliche Wasser entzogen. Auch hier wird ausgeführt, dass die Fremdstoffe wie in der DE-OS 23 32 096 zusammen mit dem Wasser beim Abtrennen des Koagulats faktisch vollständig entfernt werden, und etwa noch verbleibende Reste durch das Waschen mit weiterem Wasser vollständig ausgewaschen werden.

In DE-OS 27 51 786 wird festgestellt, dass die Ausfällung und Isolierung von Kautschuken aus ihren wässrigen Dispersionen mit einer geringeren Menge an **(Hydroxy)Alkylcellulose** durchgeführt werden kann, wenn 0,02 bis 0,25

Gew.% eines wasserlöslichen Calciumsalzes eingesetzt werden. Es wird wiederum als Vorteil beschrieben, dass nach diesem Verfahren ein extrem reines Koagulat erhalten wird, welches von Fremdbestandteilen, wie Emulgatoren, Katalysatorresten und dergleichen faktisch vollständig frei ist. Diese Fremdstoffe werden zusammen mit dem Wasser beim Abtrennen des Koagulats entfernt und etwa noch verbleibende Reste können mit Wasser ausgewaschen werden. Es wird ferner ausgeführt, dass die Eigenschaften der isolierten Kautschuke nicht nachteilig dadurch beeinflusst werden, dass mit einem Calcium-Salz koaguliert wird. Man erhalte vielmehr einen Kautschuk, bei dem die Vulkanisationeigenschaften nicht beeinträchtigt und voll zufriedenstellend seien. Dies wird als überraschend dargestellt, da eine Beeinträchtigung der Kautschukeigenschaften häufig zu beobachten sei, wenn Polymere aus Dispersionen mit Hilfe mehrwertiger Metallionen wie Calcium- oder Aluminium-Ionen ausgefällt würden. Als Beleg für die letztere Aussage wird Houben-Weyl (1961), Methoden der Org. Chemie, Makromolekulare Stoffe 1, S. 484/485 herangezogen. Die Kautschuke der DE-OS 27 51 786 wiesen demgegenüber keinerlei Verzögerung oder Verschlechterung z.B. bei der Anvulkanisation und/oder Ausvulkanisation auf.

Keiner der Schriften DE-OS 23 32 096, DE-OS 24 25 441 und DE-OS 27 51 786 ist zu entnehmen, welche Maßnahmen zwecks Erreichen einer raschen Vulkanisation und guter Vulkanisateigenschaften getroffen werden müssen.

Wie bei den zuvor beschriebenen Patenten ist es auch das Ziel der DE-OS 30 43 688, die für die Latexkoagulation nötigen Elektrolytmengen möglichst stark zu reduzieren. Dies wird gemäß der Lehre von DE-OS 30 43 688 erreicht, indem man bei der Elektrolytkoagulation von Latices neben dem anorganischen Coagulans als Hilfsmittel entweder auf Pflanzen zurückgehende proteinartige Materialien oder Polysaccharide wie z.B. Stärke und gegebenenfalls wasserlösliche Polyaminverbindungen verwendet. Als anorganische Coagulantien werden bevorzugt Alkalimetall - oder Erdalkalimetallsalze beschrieben. Durch die speziellen Additive gelingt eine Reduktion der für eine quantitative Latexkoagulation notwendigen Salzmengen. Aus DE-OS 3 043 688 sind keine Hinweise zu entnehmen, wie durch die Herstellung und/oder Aufarbeitung des Nitrilkautschuks eine schnelle Vulkanisation erreicht werden kann.

In der US-A-4,920,176 wird beschrieben und durch experimentelle Daten belegt, dass bei Koagulation eines Nitrilkautschuk-Latex mit anorganischen Salzen wie beispielsweise Natriumchlorid oder Calciumchlorid sehr hohe Natrium-, Kalium- und Calcium-Gehalte und ferner auch Emulgatoren im Nitrilkautschuk verbleiben. Dies ist jedoch unerwünscht und zwecks Erhalt eines möglichst reinen Nitrilkautschuks werden gemäß der Lehre von US-A-4,920,176 bei der Koagulation von Nitrilkautschuk-Latices anstelle der anorganischen Salze wasserlösliche kationische Polymere cingesetzt. Hierbei handelt es sich beispielsweise um solche auf der Basis von Epichlorhydrin und Dimethylamin. Durch diese Hilfsmittel wird das Ziel angestrebt, die im Produkt verbleibenden Salzmengen signifikant zu reduzieren. Die daraus erhaltenen Vulkanisate weisen eine niedrigere Quellung bei Wasserlagerung sowie einen höheren elektrischen Widerstand auf. In der Patentschrift werden die genannten Einenschaftsverbesserungen rein qualitativ auf die minimalen, im Produkt verbleibenden Kationengehalte zurückgeführt. Eine weitergehende Erklärung der beobachteten Phänomene wird nicht gegeben. Auch wird in US-A-4,920,176 keinerlei Aussage getroffen, ob und wie durch Herstellung und Aufarbeitung des Nitrilkautschuks das Vulkanisationsverhalten und das Modulniveau gesteuert werden können.

Das Ziel der EP-A-1 369 436 besteht darin, Nitrilkautschuke mit hoher Reinheit bereitzustellen. Insbesondere die Restemulgatorgehalte dieser Nitrilkautschuke sind sehr gering. Auch die bestimmten Kationengehalte in Form der Natrium-, Kalium-, Magnesium- und Calcium-Gehalte sind sehr niedrig. Man stellt die Nitrilkautschuke her, in dem man die Emulsionspolymerisation in Gegenwart von Fettsäure- und/oder Harzsäuresalzen als Emulgatoren durchführt, danach die Latexkoagulation mit Säuren vornimmt, gegebenenfalls unter Zugabe von Fällungsmitteln. Als Säuren können alle mineralischen und organischen Säuren verwendet werden, die es gestatten, die gewünschten pH-Werte einzustellen. Als zusätzliche Fällungsmittel werden beispielsweise Alkalisalze von anorganischen Säuren eingesetzt. Anschließend werden die dabei entstandenen Fett- und Harzsäuren mit wässrigen Alkalihydroxidlösungen ausgewaschen und das Polymer abschließend einer Scherung unterworfen, bis sich eine Restfeuchte von kleiner gleich 20 % einstellt. Die EP-A-1 369 436 liefert keine Hinweise zur Herstellung von Nitrilkautschuken, die eine rasche Vulkanisation und nach der Vulkanisation ein hohes Modulniveau aufweisen.

In EP-A-0 692 496, EP-A-0 779 301 und EP-A-0 779 300 werden jeweils Nitrilkautschuke auf Basis eines ungesättigten Nitrils und eines konjugierten Diens beschrieben. Gemeinsam ist allen Nitrilkautschuken, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist.

Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird.

Für die Nitrilkautschuke gemäß EP-A-0 779 300 wird ausgeführt, dass sie eine Breite "$\Delta$AN" (AN steht für Acrylnitril) der Zusammensetzungsverteilung des ungesättigten Nitrils im Copolymer im Bereich von 3 bis 20 besitzen. Das Verfahren zu ihrer Herstellung unterscheidet sich von dem der EP-A-0 692 496 dadurch, dass nur 30-80 Gew.%

der gesamten Monomermenge zu Polymerisationsbeginn eingesetzt werden und die restliche Monomermenge erst bei einem Umsatz der Polymerisation von 20-70 Gew.% zudosiert wird.

Für die Nitrilkautschuke gemäß EP-A-0 779 301 wird ausgeführt, dass sie 3-20 Gew.% einer Fraktion mit niedrigem Molekulargewicht mit einem zahlenmittleren Molekulargewicht $M_n$ kleiner 35.000 aufweisen. Das Verfahren zu ihrer Herstellung unterscheidet sich von dem der EP-A-0 692 496 dadurch, dass nur 10-95 Gew.% des Alkylthiols vor der Polymerisation in das Monomerengemisch eingemischt werden und die restliche Menge des Alkylthiols erst bei Erreichen eines Polymerisationsumsatzes von 20-70 Gew.% zudosiert wird.

Im Hinblick auf die Latex-Koagulation wird in allen drei Patentanmeldungen EP-A-0 692 496, EP-A-0 779 301 **und** EP-A-0 779 300 ausgeführt, dass beliebige Coagulatien eingesetzt werden können. Als anorganische Coagulantien werden Calciumchlorid und Aluminiumchlorid erwähnt und eingesetzt. Gemäß EP-A-0 779 301 **und** EP-A-0 779 300 besteht eine bevorzugte Ausführungsform in einem Nitrilkautschuk, der im wesentlichen halogenfrei ist und erhalten wird, indem die Latex-Koagulation in Gegenwart eines nichtionischen oberflächenaktiven Hilfsmittels und unter Verwendung von halogen-freien Metallsalzen wie Aluminiumsulfat, Magnesiumsulfat und Natriumsulfat durchgeführt wird. Als bevorzugt wird die Koagulation unter Einsatz von Aluminiumsulfat oder Magnesiumsulfat angegeben. Der dabei erhaltene, im wesentliche halogenfreie Nitrilkautschuk besitzt einen Halogengehalt von maximal 3 ppm.

In Vergleichsbeispiel 6 der EP-A-779 300 bzw. Vergleichsbeispiel 7 der EP-A-0 779 301 wird die Latexkoagulation mit einer Mischung von NaCl und $CaCl_2$ durchgeführt, wobei das $CaCl_2$ in großen Mengen eingesetzt wird und das Gewichtsverhältnis von NaCl und $CaCl_2$ 1 : 0,75 beträgt. Bezüglich der Scorchzeit und des Spannungswerts bei 100% Dehnung werden im Vergleich zu den anderen in der jeweiligen Tabelle 12 bzw. 13 aufgeführten Beispielen keine signifikanten Unterschiede gefunden.

Für die Herstellung der Nitrilkautschuke ist es gemäß EP-A-0 692 496, EP-A-0 779 300 sowie EP-A-0 779 301 essentiell, dass als Molekulargewichtsregler Alkylthiole in Form der Verbindungen 2,2,4,6,6-Pentmethylheptan-4-thiol und 2,2,4,6,6,8,8-Heptamethylnonan-4-thiol eingesetzt werden. Hierbei wird deutlich darauf hingewiesen, dass bei Einsatz des herkömmlichen bekannten tert.Dodecylmercaptans als Regler Nitrilkautschuke mit schlechteren Eigenschaften erhalten werden.

<u>2,2,4,6,6-Pentamethylheptanthiol-4</u>

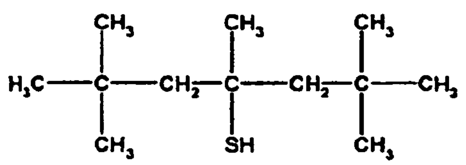

<u>2,2,4,6,6,8,8-Heptamethylnonanthiol-4</u>

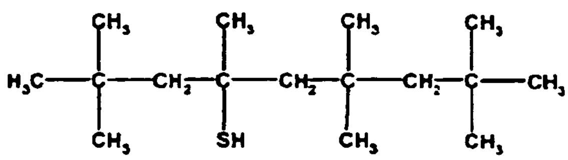

Für die in EP-A-0 692 496, EP-A-0 779 300 sowie EP-A-0 779 301 hergestellten Nitrilkautschuke wird geltend gemacht, dass sie ein vorteilhaftes Eigenschaftsprofil besitzen, eine gute Verarbeitbarkeit der Kautschukmischungen und eine niedrige Formverschmutzung bei der Verarbeitung ermöglichen. Die erhaltenen Vulkanisate sollen eine gute Kombination von Tieftemperatur- und Ölbeständigkeit besitzen und über gute mechanische Eigenschaften verfügen. Geltend gemacht wird ferner, dass bei der Herstellung der Nitrilkautschuke durch hohe Polymerisationsumsätze von größer 75%, bevorzugt größer 80% eine hohe Produktivität erzielt werden kann und auch die Vulkanisationsgeschwindigkeit bei der Vulkanisation mit Schwefel bzw. Peroxiden hoch ist, insbesondere bei NBR-Typen für die Spritzgussverarbeitung. Es wird ferner ausgeführt, dass die Nitrilkautschuke eine kurze Anvulkanisationszeit aufweisen und eine hohe Vernetzungsdichte. Als Beleg für die rasche Vulkanisation der gemäß EP-A-0 692 496, EP-A- 0 779 300 **und** EP-A-0 779 301 hergestellten Nitrilkautschuke wird die Anvulkanisationszeit (die sogenannte "Scorch time" (gemessen als "$T_5$")) herangezogen, die allerdings lediglich ein Maß für die Anvulkanisationsgeschwindigkeit darstellt. Über die gesamte Vulkanisationsgeschwindigkeit und wie diese gegebenenfalls zu beeinflussen ist, werden keinerlei Aussagen getroffen. Die Vernetzungsdichte wird nur durch Angabe des Maximum Torque Werts (gemessen als $V_{max}$) beschrieben.

In der Praxis sind kurze Scorchzeiten nicht durchgängig erwünscht, da die entsprechenden Kautschukmischungen aufgrund einer solchen schnellen Anvulkanisation nicht verarbeitungssicher sind. Insbesondere im Spritzgussverfahren ist eine rasche Anvulkanisation nicht ausreichend. Entscheidend für eine wirtschaftliche Verarbeitung ist die Einstellung kurzer Zykluszeiten. Für kurze Zykluszeiten ist die Differenz von Ausvulkanisations- und Anvulkanisationsgeschwindigkeit entscheidend. Diese wird als "$t_{90}$-$t_{10}$" gemessen, wobei $t_{90}$ die Zeit ist, zu der 90% der Endvulkanisation und $t_{10}$ die Zeit, zu der 10 % der Endvulkanisation stattgefunden haben. Durch Verwendung der in der EP-A-0 692 496, EP-A-0 779 300 **und** EP-A-0 779 301 eingesetzten Regler 2,2,4,6,6-Pentmethylheptan-4-thiol und 2,2,4,6,6,8,8-Heptamethylnonan-4-thiol ist jedoch die Einstellung einer raschen Vulkanisationscharakteristik sowie die Einstellung eines hohen Modulniveaus nicht zwangsläufig möglich.

In der EP-A-0 692 496 wird hierzu unter anderem angeführt, dass zur Einstellung hoher Vulkanisationsgeschwindigkeiten schon viele Methoden vorgeschlagen wurden, wie z. B. die Verwendung minimaler Mengen an Emulgatoren und Fällmitteln, so dass nur minimale Mengen der Emulgatoren und Fällmittel im NBR verbleiben. Nach EP-A-0 692 496 sind diese Maßnahmen allerdings nicht ausreichend (S. 2. Zeile 22-28).

Zusammenfassend ist festzustellen, dass trotz umfangreichen Literaturmaterials bis heute noch keine Massnahmen bekannt geworden sind, wie sich die Gesamt-Vulkanisationsgeschwindigkeit von Nitrilkautschuken und insbesondere die Differenz von Ausvulkanisations- und Anvulkanisationsgeschwindigkeit ($t_{90}$-$t_{10}$) beeinflussen lässt, ohne dass andere wichtige Eigenschaften des Nitrilkautschuks, wie insbesondere die Vulkanisateigenschaften beeinträchtigt werden.

Die **Aufgabe der vorliegenden Erfindung** bestand somit darin, ein Verfahren bereitzustellen, durch das man Nitrilkautschuke erhält, die bei der nachfolgenden Verarbeitung eine schnelle An - und Ausvulkanisation ermöglichen und dabei zu Vulkanisaten mit gutem Eigenschaftsprofil führt.

Es wurde überraschenderweise gefunden, dass man Nitrilkautschuke mit einer exzellenten Vulkanisationsgeschwindigkeit sowie hervorragenden Vulkanisateigenschaften erhält, wenn die Emulsionspolymerisation unter Wahl spezieller Molekulargewichtsregler durchgeführt wird und gleichzeitig die Koagulation des Latex in spezieller Weise durchgeführt wird, dabei unter Einsatz mindestens eines Magnesium-Salzes als Koagulans gearbeitet wird, so dass sich die Nitrilkautschuke aufgrund dieser verschiedenen Verfahrensmaßnahmen durch einen speziellen Gehalt an Kationen auszeichnen.

**Gegenstand der vorliegenden Erfindung** ist somit ein Verfahren zur Herstellung von Nitrilkautschuken durch Emulsionspolymerisation mindestens eines $\alpha,\beta$-ungesättigten Nitrils, mindestens eines konjugierten Diens und gegebenenfalls eines oder mehrerer weiterer copolymerisierbarer Monomere, wobei der bei der Polymerisation zunächst anfallende, den Nitrilkautschuk enthaltende Latex einer Koagulation unterworfen und der erhaltene koagulierte Nitrilkautschuk anschließend gewaschen wird, **dadurch gekennzeichnet,** dass

(i) die Emulsionspolymerisation in Gegenwart mindestens eines Alkylthiols durchgeführt wird, welches 12-16 Kohlenstoffatome und mindestens drei tertiäre Kohlenstoffatomen enthält, wobei der Schwefel an eines dieser tertiären Kohlenstoffatome gebunden ist und

(ii) der bei der Emulsionspolymerisation erhaltene Latex vor der Koagulation auf einen pH-Wert von mindestens 6 eingestellt, die Latexkoagulation unter Einsatz mindestens eines Magnesium-Salzes durchgeführt wird und der Latex vor der Zugabe des Magnesium-Salzes auf eine Temperatur kleiner 45°C eingestellt wird, wobei neben dem Einsatz mindestens eines Magnesium-Salzes zur Koagulation ferner bis zu 5 Gew.-% einer oder mehrerer anderer Salze eines oder mehrerer anderer zweiwertiger Metalle, bezogen auf die gesamte Menge aller zur Koagulation eingesetzten Salze, verwendet werden können, und es darüber hinaus möglich ist, bis zu X Gew.-% eines Salzes eines einwertigen Metalls, bezogen auf die gesamte Menge aller zur Koagulation eingesetzten Salze zu verwenden, wobei sich X Gew.-% ergeben als 50 Gew.-% abzüglich der Gew.-% Menge eines oder mehrerer anderer Salze eines oder mehrerer anderer zweiwertiger Metalle, sofern vorhanden.

**Gegenstand der vorliegenden Erfindung** ist ferner ein Nitrilkautschuk, welcher Wiederholungseinheiten mindestens eines $\alpha,\beta$-ungesättigten Nitrils, mindestens eines konjugierten Diens und gegebenenfalls eines oder mehrerer weiterer copolymerisierbarer Monomere enthält und der eine Ionenkennzahl ("IKZ") der allgemeinen Formel (I) im Bereich von 0 bis 60 ppm x g/mol aufweist,

$$IKZ = 3\left[\frac{c(Ca^{2+})}{40\ g/mol} + \frac{c(Mg^{2+})}{24\ g/mol}\right] - \left[\frac{c(Na^{+})}{23\ g/mol} + \frac{c(K^{+})}{39\ g/mol}\right] \quad (I)$$

wobei $c(Ca^{2-})$, $c(Mg^{2-})$, $c(Na^{+})$ und $c(K^{+})$ die Konzentration der Calcium-, Magnesium-, Natrium - und Kalium-Ionen im Nitrilkautschuk in ppm angibt und die Konzentration der Magnesium-Ionen $c(Mg^{2+})$ im Bereich von 50 bis 250 ppm liegt.

Diese erfindungsgemäßen Nitrilkautschuke besitzen eine hohe Vulkanisationsgeschwindigkeit, gekennzeichnet durch die Differenz von Ausvulkanisations- und Anvulkanisationszeit ($t_{90}$-$t_{10}$), sowie gute Vulkanisateigenschaften (insbesondere ein hohes Niveau der Modulwerte).

Derartige Nitrilkautschuke sind bisher aus dem Stand der Technik nicht bekannt.

In den Beispielen der EP-A-1 369 436 werden für die beschriebenen Nitrilkautschuke die Kationengehalte angegeben. Auf Basis dieser Angaben können die Ionenkennzahlen berechnet werden. Sie liegen außerhalb der bei den erfindungsgemäßen Nitrilkautschuken beobachteten Werte: In Beispiel 1 der EP-A-1 369 436 liegt eine Ionenkennzahl von -12,4 ppm x mol/g und in Beispiel 2 eine Ionenkennzahl von -7,8 ppm x mol/g vor. Gleichzeitig weist die EP-A-1 369 436 keinerlei Anhaltspunkte dafür auf, dass der Kationenmix einen Einfluss auf die gesamte Vulkanisationsgeschwindigkeit besitzt, geschweige denn, dass sich in der EP-A-1 369 436 ein Hinweis findet, wie der Kationenmix

aussehen muss, damit ein Nitrilkautschuk mit der gewünschten hohen An- und Ausvulkansationsgeschwindigkeit bei gleichzeitig gutem Eigenschaftsprofil ereeicht werden kann.

In den Beispielen der US-A-4,920,176 werden die Latices von Nitrilkautschuke unter Einsatzverschiedenster Fällungsmittel aufgearbeitet. Für die Beispiele A-D, die unter Einsatz von NaCl bzwl $CaCl_2$ als Koagulans erhalten werden, woraus ein extrem niedriger Magnesium-Gehalt resultiert. Für die Beispiele E-I der US-A-4,920,176 werden entweder Ionenkennzahlen erhalten, die weit größer sind als diejenigen der vorliegenden Erfindung oder aber es liegen Magnesium-Gehalte vor, die deutlich unterhalb oder oberhalb des erfindungsgemäß einzuhaltenden Bereichs liegen.

In keinem der Beispielen der EP-A-0 692 496, EP-A-0 779 300 und EP-A-0 779 301 wird ein Magnesium-Salz zur Latexkoagulation eingesetzt. Ohne den Einsatz eines Magnesium-Salzes bei der Koagulation sind jedoch Magnesium-Gehalte im Bereich von 50 bis 250 ppm nicht erzielbar.

**Bestimmung der Kationengehalte:**

Für die Bestimmung der Kationengehalte zur Bestimmung der lonenkennzahl IKZ gemäß vorliegender Erfindung hat sich folgende Methode bewährt und wird eingesetzt: Es werden 0,5 g der Nitrilkautschuke durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser werden die Metallgehalte durch ICP-OES (inductively coupled plasma - optical emission spectrometry) bei folgenden Wellenlängen:

| | |
|---|---|
| Calcium: | 317,933 nm, |
| Kalium: | 766,491 nm, |
| Magnesium: | 285,213 nm |
| Natrium: | 589,592 nm |

gegen mit Säurematrix angepasste Kalibrierlösungen bestimmt. Je nach Konzentration der Elemente in der Aufschlusslösung bzw. Empfindlichkeit des verwendeten Messgeräts werden die Konzentrationen der Probelösungen für die jeweils verwendeten Wellenlängen an den linearen Bereich der Kalibrierung angepasst **(**B. Welz "Atomic Absorption Spectrometry", 2nd Ed., Verlag Chemie, Weinheim 1985**)**

In der Ionenkennzahl gemäß der Formel (I) werden die Metallgehalte durch die Atomgewichte der jeweiligen Metalle dividiert. Aus diesem Grund ist die Dimension der IKZ [ppm x Mol/g].

Bevorzugt liegt die Ionenkennzahl im Bereich von 10 bis 55 ppm x mol/g, besonders bevorzugt im Bereich von 10 bis 50 ppm x mol/g.

**Nitrilkautschuk:**

Die erfindungsgemäßen Nitrilkautschuke weisen Wiederholungseinheiten mindestens eines α,β-ungesättigten Nitrils, mindestens eines konjugierten Diens und gegebenenfalls von einem oder mehreren weiteren copolymerisierbaren Monomeren auf.

Das konjugierte Dien kann von jeder Natur sein. Bevorzugt werden ($C_4$-$C_6$)-konjugierte Diene eingesetzt. Besonders bevorzugt sind 1,3-Butadien, Isopren, 2,3-Dimethylbutadien, Piperylen, 1,3-Pentadien oder Mischungen daraus. Insbesondere bevorzugt sind 1,3-Butadien und Isopren oder Gernische daraus. Ganz besonders bevorzugt ist 1,3-Butadien.

Als α,β-ungesättigtes Nitril kann jedes bekannte α,β-ungesättigte Nitril eingesetzt werden, bevorzugt sind ($C_3$-$C_5$)-α,β-ungesättigte Nitrile wie Acrylnitril, Methacrylnitril, 1-Chloracrylnitril, Ethacrylnitril oder Mischungen davon. Besonders bevorzugt ist Acrylnitril.

Ein besonders bevorzugter Nitrilkautschuk ist somit ein Copolymer aus Acrylnitril und 1,3-Butadien.

Neben dem konjugierten Dien und dem α,β-ungesättigten Nitril können noch ein oder mehrere weitere copolymerisierbare Monomere eingesetzt werden, z.B. α,β-ungesättigte Mono- oder Dicarbonsäuren, deren Ester oder Amide. Solche Nitrilkautschuke werden üblicherweise auch als carboxylierte Nitrilkautschuke, oder abgekürzt auch als "XNBR" bezeichnet.

Als α,β-ungesättigte Mono- oder Dicarbonsäuren können beispielsweise Fumarsäure, Maleinsäure, Acrylsäure, Methacrylsäure, Crotonsäure und Itakonsäure verwendet werden. Bevorzugt sind dabei Maleinsäure, Acrylsäure, Methacrylsäure und Itakonsäure.

Als Ester der α,β-ungesättigten Carbonsäuren werden beispielsweise Alkylester, Alkoxyalkylester, Hydroxyalkylester oder Mischungen daraus eingesetzt.

Besonders bevorzugte Alkylester der α,β-ungesättigten Carbonsäuren sind Methyl(meth)acrylat, Ethyl(meth) acrylat, Propyl(meth)acrylat, n-Butyl(Meth)acrylat, t-Butyl(meth)acrylat, Hexyl(meth)acrylat, 2-Ethlyhexyl(meth)acrylat,

Octyl(meth)acrylat und Lauryl(meth)acrylat. Insbesondere wird n-Butylacrylat eingesetzt.

Besonders bevorzugte Alkoxyalkylester der α,β-ungesättigten Carbonsäuren sind Methoxyethyl(meth)acrylat, Ethoxyethyl(meth)acrylat und Methoxyethyl(meth)acrylat. Insbesondere wird Methoxyethylacrylat eingesetzt.

Besonders bevorzugte Hydroxyalkylester der α,β-ungesättigten Carbonsäuren sind Hydroxyethyl(meth)acrylat, Hydroxypropyl-(meth)acrylat und Hydroxy(butyl(meth)acrylat.

Als Ester der α,β-ungesättigten Carbonsäuren werden ferner beispielsweise Polyethylenglykol(meth)acrylat, Polypropylenglykol(meth)acrylat, Glycidyl(meth)acrylat, Epoxy(meth)acrylat und Urethan(meth)acrylat eingesetzt.

Weitere mögliche Monomere sind Vinylaromaten wie Styrol, α-Methylstyrol und Vinylpyridin.

Die Anteile an konjugiertem Dien und α,β-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 40 bis 90 Gew.-%, besonders bevorzugt im Bereich von 60 bis 85 Gew. %, bezogen auf das Gesamtpolymer. Der Anteil des oder der Summe der α,β-ungesättigten Nitrile liegt üblicherweise bei 5 bis 80 Gew.-%, bevorzugt bei 10 bis 60 Gew.-%, besonders bevorzugt bei 15 bis 40 Gew.-%, bezogen auf das Gesamtpolymer. Die Anteile der Monomere summieren sich jeweils zu 100 Gew.-% auf.

Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile dieser zusätzlichen Monomere ersetzt, wobei sich die Anteile aller Monomere weiterhin jeweils zu 100 Gew.-% aufsummieren.

Werden als zusätzliche Monomere Ester der (Meth)acrylsäure eingesetzt, so erfolgt dies üblicherweise in Mengen von 1 bis 25 Gew. %.

Werden als zusätzliche Monomere α,β-ungesättigte Mono- oder Dicarbonsäuren eingesetzt, so erfolgt dies üblicherweise in Mengen von weniger als 10 Gew. %.

Der Stickstoffgehalt wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew. % löslich.

Die Nitrilkautschuke weisen Mooney-Viskositäten (ML (1+4 @100°C)) von 10 bis 150, vorzugsweise von 20 bis 100 Mooneyeinheiten auf. Die Mooney-Viskosität (ML (1+4@100°C)) wird mittels eines Scherscheibenviskosimeters nach DIN 53523/3 bzw. ASTM D 1646 bei 100°C bestimmt.

Die Glastemperaturen der Nitrilkautschuke liegen im Bereich -70°C bis +10°C, vorzugsweise im Bereich -60°C bis 0°C.

Bevorzugt sind erfindungsgemäße Nitrilkautschuke, die Wiederholungseinheiten von Acrylnitril, 1,3-Butadien und gegebenenfalls von einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren α,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl (meth)acrylat, Propyl(meth)acrylat, n-Butyl(meth)acrylat t-Butyl(meth)acrylat, Hexyl(meth)acrylat, 2-Ethlyhexyl(meth) acrylat, Octyl(meth)acrylat oder Lauryl(meth)acrylat.

**Verfahren zur Herstellung der Nitrilkautschuke:**

Die Herstellung der Nitrilkautschuke erfolgt im erfindungsgemäßen Verfahren durch Emulsionspolymerisation.

Als **Emulgatoren** können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmaan's Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl), Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-Natrium, Kalzium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten. kondensierte Aromaten, sowie

methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugte

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alktylierter Naphthalinsulfonate sowie die Na-Salze methlyenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsuflonatgemische mit 12 bis 18 C-Atomen, Na-Alkylarylsulfonate, Na-Diisobutylennaphthalinsulfonat, methlyenverbückte Polynaphthalinsulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidern Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblichenveise nicht alleine, sondern in Kombination mit anionischen Emulgatoren eingesetzt..

Bevorzugt sind die Na- und K-Salze von disproportionierter Abietinsäure und von teiltydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew. Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbskoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung notwendig werden.

Zur **Molekulargewichtsregelung** des entstehenden Nitrilkautschuks wird mindestens ein Alkylthiol eingesetzt, das 12-16 Kohlenstoffatome und mindestens drei tertiäre Kohlenstoffatomen enthält, wobei der Schwefel an eines dieser tertiären Kohlenstoffatome gebunden ist. Diese Mercaptane können entweder einzeln oder in Gemischen verwendet werden. Geeignet sind beispielsweise die Additionsverbindungen von Schwefelwasserstoff an oligomerisiertes Propen, insbesondere tetrameres Propen, oder an oligomerisieries Isobuten, insbesondere trimere Isobuten, die in der Literatur häufig als tertiäres Dodeccylmercaptan ("t-DDM") bezeichnet werden.

Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar (siehe z.B. z.B. JP 07-316126, JP 07-316127 und JP 07-316128 sowie GB 823,823 und GB 823,824.)

Ein bevorzugtes Beispiel für ein Alkylthiol, das die oben vorgegebene Definition erfüllt ist 2,2,4,6,6,8,8-Pentamethylheptan-4-thiol.

Besonders bevorzugt ist ferner ein neues Gemisch von $C_{12}$-Mercaptanen enthaltend

- 2,2,4,6,6-Pentamethylheptanthiol-4,
- 2,4,4,6,6-Pentametuylheptanthiol-2,
- 2,3,4,6,6-Pentamethylheptanthiol-2 und
- 2.3,4,6,6-Pentamethylheptanthiol-3,

welches zusammen mit einem Verfahren zu seiner Herstellung in einer am gleichen Tag eingereichten Anmeldung der Lanxess Deutschland GmbH beschrieben wird. Bevotzugterweise wird dieses spezielle neue Gemisch durch Umsetzung von Schwefelwasserstoff mit Trüsobuten in einem kontinuierlichen Verfahren bei Temperaturen im Bereich von 0°C bis -60°C erhalten, wobei

(a) der Schwefelwasserstoff vor der Umsetzung einer Trocknung unterzogen wird,
(b) das eingesetzte Trüsobuten einen Wassergehalt von maximal 70 ppm besitzt,
(c) als Katalysator Bortrifluorid in Mengen von maximal 1,5 Gew.%, bezogen auf das eingesetzte Trüsobuten verwendet wird,
(d) die Umsetzung in Abwesenheit von mit Bortrifluorid komplex bilden den Verbindungen erfolgt und
(e) das Reaktionsgemisch im Anschluss an die Umsetzung mit einer wässrigen alkalischen Lösung in Kontakt gebracht und der Katalysator entfernt wird.

Der Molekulargewichtsregler wird in einer Menge von 0,05 bis 3 Gew.-Teilen, vorzugsweise von 0,1 bis 1,5 Gew.-Teilen bezogen auf 100 Gew.-Teile der Monomermischung eingesetzt. Eingesetzt werden können sowohl einzelne als auch Mischungen verschiedener Regler.

Die Dosierung des Molekulargewichtsreglers bzw. der Molekulargewichtsreglermischung erfolgt entweder zu Beginn der Polymerisation oder aber portionsweise im Verlauf der Polymerisation, wobei die portionsweise Zugabe sämtlicher oder einzelner Komponenten der Reglermischung während der Polymerisation bevorzugt ist.

Der Molekulargewichtsregler findet sich aufgrund seiner Funktion in einem gewissen Maß in Form von Endgruppen im Nitrilkautschuk wieder, d.h. der Nitrilkautschuk hat in einem gewissen Maß Alkylthio-Endgruppen. In dem Fall, dass das oben beschriebene neue Gemisch von $C_{12}$-Mercaptanen eingesetzt wird, handelt es sich somit um die entsprechenden Thio-Endgruppen der im Reglergemisch enthaltenen Thiole, d.h. 2,2,4,6,6-Pentamethylheptan-4-thio- und/oder 2,4,4,6,6-Pentamethylheptan-2-thio- und/oder 2,3,4,6,6-Pentamethylheptan-2-thio und/oder 2,3,4,6,6-Pentamethylheptan-3-thio-Endgruppen.

Zur Initiierung der Emulsionspolymerisation werden typischerweise Polymerisationsinitiatoren eingesetzt, die in Radikale zerfallen. Hierzu gehören Verbindungen, die eine -O-O- Einheit (Peroxo-Verbindungen) oder eine -N≡N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethytendiamtetraacetat. Natrium-Nitrilotriacetat sowie Trinatriumphosphat oder Tetrakaliumdiphsophat.

Bevorzugte Redoxsysteme sind beispielsweise: 1) Kaliumperoxodisulfat in Kombination mit Triethanolamin, 2) Ammoniumperoxodiphosphat in Kombination mit Natrimmetabisulfit ($Na_2S_2O_5$), 3) p-Menthanhydroperoxid / Natriumformaldehydsulfoxylat in Kombination mit Fe-II-Sulfat ($FeSO_4$*7 $H_2O$). Natrium-Ethylendiaminoacetat und Trinatriumphosphat; 4) Cumolhydroperoxid / Natriumformaldehydsulfoxylat in Kombination mit Fe-II-sulfat ($FeSO_4$*7 $H_2O$), Natrium-Ethylendiaminoacetat und Tetrakaliumdiphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Überganasmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die Polymerisationszeit liegt im Bereich von 5 h bis 15 h und hängt im Wesentlichen vom Acrylnitrilgehaft der Monomermischung und von der Polymerisationstemperatur ab.

Die Polymerisationstemperatur liegt im Bereich von 0 bis 30°C, bevorzugt im Bereich von 5 bis 25°C.

Bei Erreichung von Umsätzen im Bereich von 50 bis 90%, vorzugsweise im Bereich von 70 bis 85% wird die Polymerisation abgestoppt.

Hierfür wird dem Reaktionsgemisch ein Stopper zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-α-Naphthylamin und aromatische Phenole wie tert-Butylbrenzkatechol, oder Phenothiazin.

Die bei der Emulsionspolymerisation verwendete Wassermenge liegt im Bereich von 100 bis 900 Gew.-Teiten, bevorzugt im Bereich von 120 bis 500 Gew.-Teilen, besonders bevorzugt im Bereich von 150 bis 400 Gew.- Teilen Wasser bezogen auf 100 Gew.- Teile der Monomermischung.

Zur Reduktion der Viskosität während der Polymerisation, zur pH-Einstellung sowie als pH-Puffer können der

wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0.5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzelung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegt. Vorzugsweise ist eine Nachdosierung bei NBR-Typen mit Acrylnitrilgehahen von 10 bis 34 sowie bei den Typen mit 40 bis 50 Gew.% Acrylnitril (W. Hofmann, Rubber Chem. Technol. 36 (1963) 1) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird.

Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk-.

Latex-Koagulation:

Vor oder bei der Latexkoagulation können dem Latex ein oder mehrere Alterungsschutzinittel zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch behinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind *N*-Isopropyl-*N*'-phenyl-*p*-Phenylendiamin, *N*-1,3-Dimetbylbutyl-*N*'-Phenyl-*p*-Phenylendiamin (6PPD), *N*-1,4-Dimethylpentyl-*N*'-phenyl-*p*-Phenylendiamin (7PPD), N,N'-bis-1,4-(1,4-Dimethylpentyl) p-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Altrungsschutzmitteln eingesetzt. TMQ, MBI und MMBI werden vor allem für NBR-Typen verwendet, die peroxidisch vulkanisiert werden.

Für die Koagulation wird der Latex mit einem pH-Wert von mindestens 6, bevorzugt von > 6 eingesetzt. Gegebenenfalls wird dieser pH-Wert durch Zusatz einer Base, bevorzugt von Ammoniak bzw. Natrium- oder Kaliumhydroxid eingestellt.

Die Latexkoagulation wird unter Einsatz mindestens eines Magnesium-Salzes durchgeführt. Geeignet ist beispielsweise der Einsatz von Magnesiumchlorid, Magnesiumsulfat und/oder Magnesiumnitrat. Bevorzugt wird Magnesiumchlorid eingesetzt.

Neben dem Einsatz mindestens eines Magnesium-Salzes, bevorzugt in Form von Magnesiumchlorid, ist es möglich, zur Koagulation ferner bis zu 5 Gew.% einer oder mehrerer anderer Salze eines oder mehrerer anderer zweiwertiger Metalle, bezogen auf die gesamte Menge aller zur Koagulation eingesetzten Salze, zu verwenden.

Darüber hinaus ist es möglich, bis zu X Gew% eines Salzes eines einwertigen Metalls, bezogen auf die gesamte Menge aller zur Koagulation eingesetzten Salze, zu verwenden, wobei sich X Gew% ergeben als 50 Gew.% abzüglich der Gew.% Menge einer oder mehrerer anderer Salze eines oder mehrerer anderer zweiwertiger Metalle, sofern vorhanden.

Sofern keine anderen Salze zweiwertiger Metalle in der Koagulation anwesend sind, können somit beispielsweise bis zu 50 Gew.% an Kalium-Salzen, bevorzugt Kaliumchlorid, und/oder an Natrium-Salzen, bevorzugt Natriumchlorid, bezogen auf die gesamte Menge an eingesetzten Salzen eingesetzt werden. Verunreinigungen in Form von

Calcium-Salzen oder aktive Zusätze von Calciumsalzen, bevorzugt Calciumchlorid. sollten 5 Gew.%, bezogen auf die gesamte Menge aller eingesetzten Salze nicht übersteigen, wobei sich durch die Anwesenheit solcher Calcium-Salze die Gew.% Menge für die Salze eines einwertigen Metalls entsprechend reduziert.

Für die Latexkoagulation werden 0,1 bis 10 Gew. %, vorzugsweise 0,5 bis 5 Gew.% mindestens eines Magnesium-Salzes bezogen auf Nitrilkautschuk eingesetzt Bevorzugterweise werden gerade solche Magnesium-Salz-Mengen verwendet, die zur vollständigen Koagulation des Nitrilkautschuks benötigt werden und zuvor an aliquoten Teilmengen des zu koagulierenden Latex ermitielt werden.

Die Konzentration der Magnesium-Salzlösung, bevorzugt der Magnesiumchloridlösung, beträgt üblicherweise 0,1 bis 35 Gew. %, vorzugsweise 0,5 bis 30 Gew. %.

Die wässrige Lösung mindestens eines Magnesium-Satzes, bevorzugt des Magnesiumchlorids, wird mit entionisiertem Wasser oder nicht entionisiertem und somit calciumionenhaltigem Wasser hergestellt. Bei Verwendung von calciumionenhaltigem Wasser ist darauf zu achten, dass die Menge an Calcium aus a) eventuellen Verunreinigungen im Magnesium-Salz und b) dem eingesetzten Wasser in Summe 5 Gew.%, vorzugsweise 1 Gew.%, bezogen auf die gesamte Menge aller eingesetzten Salze nicht übersteigt.

Vor der Latexkoagulation wird der Latex pH durch Zusatz von Basen auf Werte von mindestens 6, bevorzugt von > 6 eingestellt. Für die pH-Einstellung werden beispielsweise Ammoniak, Natrium - oder Kaliumhydroxid verwendet.

Die Latexkoagulation kann erreicht werden, indem die Salzlösung zum Latex gegeben wird, oder alternativ, indem der Latex vorgelegt und die Salzlösung zugegeben wird. Die Latexkoagulation erfolgt kontinuierlich oder diskontinuierlich. Bevorzugt ist eine kontinuierliche Koagulation, die mit Hilfe von Düsen durchgeführt wird.

Es ist wichtig für das erfindungsgemäße Verfahren, dass die Temperatur des Latex vor der Zugabe des Magnesium-Salzes auf einen Wert kleiner 45°C eingestellt wird. Nur auf diese Weise wird sicheräestellt, dass im Augenblick der Salzzugabe der Latex ein sehr feinteiliges Koagulat bildet. Nach der Salzzugabe kann das Gemisch, sofern gewünscht, auf Temperaturen bis zu 100°C, vorzugsweise auf eine Temperatur im Bereich von 50 bis 90°C erwärmt werden. Bei diesem Aufheizen auf höhere Temperaturen entstehen größere, abfiltrierbare Partikel mit Durchmessern > 5 mm.

Neben dem oder den zuvor beschriebenen Salzen als Elektrolyten können bei der Koagulation auch Fällbilsfmittel eingesetzt werden. Als Fällhilfsmittel kommen beispielsweise wasserlösliche Polymere infrage. Die wasserlöslichen Polymere sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäureglceride, Phenol, alkylierte Phenole, (Alkyl)phenol/Formaldehyd-Kondensate etc. Die Additionsprodukte von Ethylenoxid und Propylenoxid an diese Verbindungen können statistisch und blockartig aufgebaut sein. Von diesen Produktes sind solche bevorzugt, bei denen die Löslichkeit mit zunehmender Temperatur abnimmt. Charakteristische Trübungstemperaturen liegen im Bereich 0 bis 100°C, insbesondere im Bereich von 20 bis 70°C.

Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblicherweise auf Polyaminen sowie auf Homo- und Copolymeren des (Meth)acrylamids- Bevorzugt sind Polymethaexrylamide und Polyamine, insbesondere auf Basis Epichlorhydrin und Dimethylamin.

Die Mengen an polymeren Fälwilfsmitteln betragen 0,01 bis 5 Gew.-Teilen, bevorzugt 0,05 bis 2,5 Gew.-Teile auf 100 Gew: Teile Nitrilkautschuk.

Auch der Einsatz anderer Fällhilfsmittel ist denkbar. Es ist aber anzumerken, dass es ohne Probleme möglich ist, das erfindungsgemäße Verfahren mit dem gewünschten Erfolg in Abwesenheit von zusätzlichen Fällhilfsmitteln und dabei insbesondere in Abwesenheit von $C_1$-$C_4$-Alkylcellulosen, Hydroxyalkylcellulosen, auf Pflanzen zurückgehenden proteinartigen Materialien oder Polysacchariden, wie z.B. Stärke, oder wasserlöslichen Polyaminverbindungen durchzuführen Der zur Koagulation eingesetzte Latex besitzt zweckmäßigerweise eine Feststoffkonzentration im Bereich von 1 % bis 40 %, vorzugsweise im Bereich von 5 % bis 35 % und besonders bevorzugt im Bereich von 15 bis 30 Gew. %.

Wäsche des koagulierten Nitrilkautschuks:

Nach der Koagulation liegt der Nitrilkautschuk üblicherweise in Form sogenannter Krümel vor. Die Wäsche des koagulierten NBR wird daher auch als Krümelwäsche bezeichnet. Für die Wäsche dieser koagulierten Krümel kann entweder deionisiertes Wasser, DW, oder nicht entionisiertes Wasser, BW, eingesetzt werden. Sofern bei der Koagulation dies Latex mit mindestens einem Magnesium-Salz kein Calcium-Salz im angegebenen möglichen Mengenbereich (bis zu 5 Gew.% aller eingesetzten Salze) anwesend ist, hat es sich bewährt, bei der Wäsche des koagulierten NBR nicht entionisiertes und damit calciumionenhaltiges Wasser zu verwenden.

Die Wäsche wird bei einer Temperatur im Bereich von 15 bis 90°C durchgeführt, wobei eine Temperatur im

Bereich von 45 bis 70°C bevorzugt ist.

Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk.

Bevorzugterweise werden die Kautschukkrümel einer mehrstufigen Wäsche unterworfen, wobei die Kautskkukkrümel zwischen den einzelnen Waschstufen teilweise entwässert werden. Die Restfeuchten der Krümel zwischen den einzelnen Waschstufen liegen im Bereich von 5 bis 50 Gew%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist.

Wasserentfernung und Trocknung:

Nach Abschluss der Wäsche erfolgt typischerweise eine Entwässerung der Nitrilkautschuk-Krümel. Dies geschieht üblicherweise zweistufig. In der 1. Stufe werden die Kautschukkrümel mechanisch vorentwässert. In der 2. Stufe wird das restliche Wasser verdampft. Sowohl die Vorentwässerung als auch die Trocknung erfolgen bevorzugt kontinuierlich. Für die mechanische Vorentwässerung eignen sich Seiherschnecken, bei denen das Wasser seitlich über Seiherspalte abgequetscht wird oder Schnecken, bei denen die mechanische Entwässerung gegen den Produktstrom (Weldingprinzip) erfolgt.

Die Einstellung der im Nitrilkautschuk verbleibenden Kationengehalte kann zusätzlich und wenn gewünscht durch den Grad der mechanischen Vorentwässerung beeinflusst werden. Dies bietet sich insbesondere dann an, wenn eine sogenannte ineffiziente Wäsche angewandt wird. Eine effizienten Wäsche liefert bereits die geeigneten Kationengehalte. Die Wassergehalte nach der mechanischen Vorentwässerung liegen im Bereich von 5 bis 25 Gew. %. Für die Einstellung des im Produkt verbleibenden Kationenmixes hat es sich bewährt, dass die Wassergehalte nach der mechanischen Vorentwässerung 5 bis 15 Gew. %, insbesondere 5 bis 10 Gew. % betragen.

Die Trocknung des vorentwässerten Nitrilkautschuks erfolgt in einem Fließbettrockner oder in einem Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

Überraschenderweise besitzen die erfindungsgemäßen Nitrilkautschuke, die den aufgeführten speziellen Gehalt an Kationen und damit die Ionenkennzahl im angegebenen Bereich sowie den speziellen Magnesium-Gehalt vorweisen, die gewünschte hohe Vulkanisationsgeschwindigkeit (Differenz von Ausvulkanisations- minus Anvulkanisationszeit) und die erhaltenen Vulkanisate verfügen über ein sehr gutes Modulniveau.

Gegenstand der Erfindung ist daher auch die Verwendung der erfindungsgemäßen Nitrilkautschuke zur Herstellung von vulkanisierbaren Mischungen enthaltend mindestens einen erfindungsgemäßen Nitrilkautschuk, mindestens einen Vernetzer und gegebenenfalls weitere Additive.

Die Herstellung dieser vulkanisierbaren Mischungen erfolgt durch Mischen mindestens eines erfindungsgemäßen Nitrilkautschuks, mindestens eines Vernetzers und gegebenenfalls weiterer Additive.

Als Vernetzer kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy). 3,3,5-trimethylcylohexan, tert-Butylperbenzoat, 2.2 Bis(t-butylperoxy) buten, 4,4-di-tert.Butyl peroxynonylvaterat, Dicumylperoxid, 2,5-Dimethyl-2,5-di(t-butylperoxy)-hexan, tert-Butyleumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N-'m-phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS). Caprolactamdisulfid, Dipentamethylenthiuramtetrasulfid (DPTT). und Tetramethylthiuramdisultid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate,

Thiurame, Thiazole, Sulfenamide, Xanthogenate, Guanidinderivate, Caprolactame und Thioharnstoffderivate.

Als Dithiocarbamale können beispielsweise eingesetzt werden: Ammoniumdimethyldithiocarbamat, Natriumdiethyldithiocarbamat (SDEC), Natriumdibutyldithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat Nickeldimethyldithiocarbamat und Zinkdiisononyldithiocarbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazytdisulfid (MBTS), Zinkmercaptobenzothiazol (ZMBT) und Kupfer-2-mercaptobenzothiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfonamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) und Dithiophoshorylpolysulfid.

Als Caprolactam kann beispielsweise Dithio-bis-caprolactam eingesetzt werden.

Als Thiohamstoffderivate können beispielsweise N,N'-Diphenylthiohamstoff (DPTU), Diethylthiohamstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvennetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen Kautschukadditiven gemischt werden.

Diese schließen beispielsweise die typischen und dem Fachmann hinlänglich bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als Füllstoffe können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform),oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an

Füllstoffäktivatoren beträgt üblicherweise 0 bis 10 phr, bezogen auf 100 phr des Nitrilkautschuks.

Als **Alterungssehutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Formteilen auf Basis mindestens eines erfindungsgemäßen Nitrilkautschuks, welches dadurch gekennzeichnet ist, dass man die zuvor beschriebene vulkanisierbare Mischung in einem Formgebungsverfahren, bevorzugt unter Anwendung eines Spritzgussverfahrens, vulkanisiert.

**Gegenstand der Erfindung** ist somit ebenso das spezielle Formteil, welches erhältlich ist durch das vorgenannte Vulkanisationsverfahren.

Durch dieses Verfahren können eine Vielzahl von Formteilen hergestellt werden, so z.B. eine Dichtung, eine Kappe, einen Schlauch oder eine Membran. Insbesondere eignen sich die erfindungsgemäßen Nitrilkautschuke mit der speziellen Ionenkennzahl zur Herstellung einer O-Ringdichtung, einer Flachdichtung, eines Wellendichtrings, einer Dichtmanschette, einer Dichtkappe, einer Staubschutzkappe, einer Steckerdichtung, eines Thermoisolierschlauchs (mit und ohne PVC-Zusatz), eines Ölkühlerschlauchs, eines Luftansaugschlauchs, eines Servolenkschlaucsh oder einer Pumpenmembran.

Alternativ zur direkten Herstellung von Formteilen auf Basis des erfindungsgemäßen Nitrilkautschuks ist es auch möglich, dass sich an die Herstellung des erfindungsgemäßen Nitrilkautschuks entweder (i) eine Metathese-Reaktion oder (ii) eine Metathese-Reaktion und eine nachfolgende Hydrierung oder (iii) nur eine Hydrierung anschließt. Diese Metathese- bzw. Hydrierungsreaktionen sind beide dem Fachmann hinlänglich bekannt und in der Literatur beschrieben.

Die Metathese ist beispielsweise aus WO-A-02/100941 sowie der WO-A-02/100905 bekannt.

Eine Hydrierung kann unter Einsatz homogener oder heterogener Hydrierkatalysatoren durchgeführt werden. Es ist ferner möglich, die Hydrierung in-situ durchzuführen, d.h. in dem gleichen Reaktionsgefäß, in dem gegebenenfalls zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe **z.B.**US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

$$(R^1{}_mB)_1\ M\ X_n,$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris (triphenylphosphin)-rhodium(I)-chlorid, Tris(triphenylphosphin)-rhodium(III)-chlorid und Tris(dimethylsulfoxid)-rhodium (III)-chlorid sowie Tetrakis(triphenylphosphin)-rhodium-hydrid der Formel $(C_6H_5)_3P)_4$RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^1{}_mB$ ist, wobei $R^1$, m und B die zuvor für den Katalysator genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarhonat oder Bariumsulfat geträgert sind.

Die nach der Metathese- und/oder Hydrierungsreaktion der erfindungsgemäßen Nitrilkautschuke erhaltenen, gegebenenfalls hydrierten Nitrilkautschuke können analog zu den erfindungsgemäßen Nitrilkautschuken in vulkanisierbare Zusammensetzungen eingebracht werden und zur Herstellung von Vulkanisaten und Formteilen auf Basis solcher Vulkanisate verwendet werden. Diese gegebenenfalls hydrierten Nitrilkautschuke weisen Mooney-Viskositäten (ML (1+4 @100°C)) von 1 bis 50, vorzugsweise von 1 bis 40 Mooneyeinheiten auf.

## <u>BEISPIELE:</u>

### Allgemeine Angaben:

### <u>I Bestimmung der Kationengchalte für die Ionenkennzahl</u>

Für die Bestimmung der Kationengehalte wurden 0,5 g der Nitrilkautschuke durch trockene Veraschung bei 550°C im Platintiegel mit anschliessendem Lösen der Asche in Salzsäure aufgeschlossen. Nach geeigneter Verdünnung der Aufschlusslösung mit deionisiertem Wasser werden die Metallgehalte durch ICP-OES (inductively coupled plasma - optical emission spectrometry) bei folgenden Wellenlängen:

Calcium: 317,933 nm,
Magnesium: 285,213 nm
Kalium: 766,491 nm,
Natrium: 589,592 nm

gegen mit Säurematrix angepasste Kalibrierlösungen gemessen. Je nach Konzentration der Elemente in der Aufschlusslösung bzw. Empfindlichkeit des verwendeten Messgeräts wurden die Konzentrationen der Probelösungen für die jeweils verwendeten Wellenlängen an den linearen Bereich der Kalibrierung angepasst **(**B. Welz "Atomic Absorption Spectrometry", 2nd Ed., Verlag Chemie, Weinheim 1985**)**

### <u>II Anvulkanisationverhalten und Vulkanisationsgeschwindigkeit</u>

Das **Anvulkanisationsverhalten** (Mooneyscorch) wird mit Hilfe eines Scherscheibenviskosimeters nach DIN 53 523 bei 120°C bestimmt. Für die Bestimmung wird ein kleiner Rotor (S) verwendet. MS 5 (120°C) bedeutet die Zeit in min, in der der Mooneywert um 5 Mooneyeinheiten gegenüber dem Minimalwert ansteigt.

Die **Vulkanisationsgeschwindigkeit** wird nach DIN 53 529, Teil 3 bei 160°C mit Hilfe eines Rheometers der Firma Monsanto (MDR 2000E) als Differenz von $t_{90}$ - $t_{10}$ bestimmt, wobei $t_{10}$ und $t_{90}$ die Vulkanisationszeiten sind, bei denen 10 % bzw. 90% des Endvulkanisationsgrades erreicht sind.

Das Vulkanisationsverhalten der Mischungen wurde im Rheometer bei 160°C nach DIN 53 529 Auf diese Weise wurden die charakteristischen Vulkanisationszeiten $t_{10}$ und $t_{90}$ bestimmt.

## III Mechanische Eigenschaften

Die **mechanischen Eigenschaften** der Kautschuke (wie Spannungswert bei verschiedenen Dehnungen, Reißfestigkeit und Bruchdehnung) werden an Vulkanisaten nach DIN 53 504 bestimmt.

## A NBR-Herstellung durch Emulsionspolymerisation

Auf Basis der in der folgenden **Tabelle 1** angegebenen Rezepturen wurde zwei NBR-Latices A und B hergestellt. Sämtliche Einsatzstoffe sind in Gew.-Teilen bezogen auf 100 Gew.-Teile der Monomermischung angegeben. Die Polymerisation erfolgte bei einer Temperatur von 13 °C. für eine Dauer von 13,5 Stunden bis zum Erreichen eines Polymerisationsumsatzes von 80%.

**Tabelle 1:**

| Latex-Nr. | A | B |
|---|---|---|
| Butadien | 73 | 73 |
| Acrylnitril | 27 | 27 |
| Gesamt-Wassermenge | 220 | 220 |
| Erkantol® BXG[1)] | 3,67 | 3,67 |
| Baykanol® PQ[2)] | 1,10 | 1,10 |
| K-Salz der Kokosfettsäure | 0,73 | 0,73 |
| KOH | 0,05 | 0,05 |
| t-DDM[7)] | 0,24/0,24 | 0.24/0,24 |
| Kaliumperoxodisulfat[3)] | 0,39/0,19 | 0,39/0,19 |
| Tris-(α-hydroxy-ethyl)-amin [4)] | 0,55 | 0,55 |
| Na-Dithionit [5)] | 1,19 | 1,0 |
| Diethylhydroxylamin | 0 | 0,5 |
| Kaliumhydroxid | 1,28 | 1,28 |
| Vulkanox® KB [6)] | 1,25 | 1,25 |

1) Natriumsalz einer Mischung von mono- und disulfonierten Naphthalinsulfonsäuren mit Isobutylenoligomersubstituenten (Erkanto® BXG)
2) Natriumsalz von Methlyen-bis-Naphthalinssulfonat (Baykanol® PQ. Lanxess Deutschland GmbH)
3) Aldrich-Bestellnummer : 21,622-4
4) Aldrich-Bestellnummer : T5,830-0
5) Aldrich-Bestellnummer : 15,795-3
6) 2,6-Di-tert butyl-p-kresol der Lanxess Deutschland GmbH
7) t-DDM (Tertiäres Dodecylmercaptan): $C_{12}$-Mercaptangemisch der Lanxess Deutschland GmbH

Sind in der og. Tabelle 1 in einer der Spalten für die Nitrilkautschuke A und B zwei Zahlenwerte angegeben, so bedeutet dies, dass die gesamte Menge des jeweiligen Einsatzstoffes nicht in einer einzigen Portion zudosiert wurde, sondern ein erster Teil bei Polymerisationsbeginn vorgelegt und ein zweiter Teil nachdosiert wurde. Die Umsätze, bei denen diese Nachdosierung erfolgte, sind nachfolgend angegeben.

Die Herstellung des NBR-Latex erfolgte diskontinuierlich in einem 2 $m^3$-Autoklaven mit Rührwerk. Bei dem Ansatz wurden 350 kg der Monomermischung und eine Gesamtwassermenge von 770 kg verwendet. In 609 kg dieser Wassermenge wurden die Emulgatoren Erkantol® BXG (12,85 kg), Baykanol® PQ (3,85 kg) und das Kaliumsalz der Kokosfettsäure (2,56 kg) mit 84 g Kaliumhydroxid im Autoklaven vorgelegt und mit einem Stickstoffstrom gespült. Nach Beendigung der Sticktoffspülung wurden die entstabilisierten Monomeren (255,5 kg Butadien und 94,5 kg Acrylnitril) und eine Teilmenge des Reglers t-DDM (0,84 kg) in den Reaktor gegeben. Danach wurde der Reaktor verschlossen.

Die Restmenge an Wasser (161 kg) wurde für die Herstellung der wässrigen Lösungen von Tris-($\alpha$-hydroxy-ethyl)-amin, Kaliumperoxodisulfat und der Abstopperlösungen verwendet. Durch Zugabe wässriger Lösungen von 1,365 kg Kaliumperoxodisulfat (entsprechend den 0,39 Gew.-Teilen gemäß Tabelle 1) und 1,925 kg Tris-(a-hydroxy-ethyl)-amin (entsprechend den 0,55 Gew.-Teilen gemäß Tabelle 1) wurde die Polymerisation bei 17°C gestartet und über die gesamte Laufzeit bei dieser Temperatur gehalten. Der Polymerisationsverlauf wurde durch gravimetrische Umsatzbestimmungen verfolgt. Bei einem Polymerisationsumsatz von 15 % wurden 0,84 kg Regler t-DDM (entsprechend 0,24 Gew.-Teilen gemäß Tabelle 1) und 0,665 kg Kaliumperoxodisulfat (entsprechend 0,19 Gew.-Teilen gemäß Tabelle 1) nachdosiert. Bei Erreichen von 80 % Umsatz (13,5 h) wurde die Polymerisation durch Zugabe einer wässrigen Lösung von Natriumdithionit und Kaliumhydroxid (Latex A) bzw. Natriumdithionit/(N,N-Diethylhydroxylamin (DEHA) und Kaliumhydroxid (Latex B) abgestoppt Nicht umgesetzte Monomere und sonstige flüchtige Bestandteile wurden mittels Wasserdampfdestillation entfernt.

Die charakteristischen Daten der beiden Latices sind in nachfolgender **Tabelle 2** zusammengefasst.

**Tabelle 2:**

| Latex-Nr. | A | B |
|---|---|---|
| **Teilchendurchmesser ($d_{50}$) [nm]** | 360 | 370 |
| **Feststoffgehalt [Gew.%]** | 18,9 | 20,4 |
| **pH-Wert** | 8,9 | 9,7 |
| **Acrylnitrilgehalt [Gew. %]** | 28,9 | 28,0 |

Vor der Koagulation der NBR-Latices wurden diese mit einer 50%igen Dispersion von Vulkanox® KB (1,25 Gew.% Vulkanox®KB bezogen auf NBR-Feststoff) versetzt. Die Vulkanox®-KB-Dispersion wurde bei 95 bis 98 °C mit Hilfe eines Ultraturrax hergestellt und bestand aus:

| | |
|---|---|
| 360 g | Entionisiertes Wasser (DW-Wasser) |
| 40 g | Alkylphenolpolyglykolether (EmulgatorNP10 der Lanxess DeutschlandGmbH) |
| 400 g | Vulkanox® KB der Lanxess Deutschland GmbH |

**B Latexaufarbeitung**

Die Konzentration der Salzlösung sowie die für die Fällung eingesetzten Salzmengen wurden jeweils ohne Kristallwasser berechnet. Die bei der Latexkoagulation verwendeten Salze, die Konzentration der Salzlösungen, die bezogen auf den NBR Kautschuk eingesetzten Salzmengen, die Koagulationstemperatur, die Temperatur bei der Wäsche sowie die Dauer der Wäsche sind in den nachfolgenden Tabellen aufgelistet.

Die Salzmengen wurden jeweils in Vorversuchen so ausgelegt, dass die bei der Latexkoagulation entstehenden Kautschukkrümel größer als 5 mm waren, damit sie bei der nachfolgenden Krümelwäsche nicht durch den Waschwasscrstrom ausgetragen wurden.

Es wurden jeweils 25 kg Latex zum Feststoff aufgearbeitet. Die Latexkoagulation erfolgte diskontinuierlich in einem rührbaren, offenen Behälter mit 100 1 Fassungsvermögen. Hierbei wurde der Latex im Koagulationsbehälter vorgelegt, dann auf die in den Tabellen 3 und 4 in Spalte 6 genannten Temperaturen aufgeheizt, sofern diese über 20°C lagen, anschließend die wässrige Salzlösung unter Rühren bei dieser Temperatur zugegeben und dann die Reaktionsmischung auf die in den Tabellen 3 und 4 in Spalte 7 genannten Temperaturen erwärmt.

Für die Krümelwäsche war der 100 1-Koagulationsbehälter mit einem Zu- und Abfluss versehen. An der Innenseite des Behälters waren zwei Schienen so angebracht, dass der Abfluss mittels eines Siebes (Maschenweite 2 mm) vor der Durchführung der Wäsche abgesperrt werden konnte, so dass die koagulierten Krümel bei der Wäsche nicht ausgeschwemmt wurden. Die Wäsche wurde mit einem konstanten Wasserdurchsatz von 200 l/h durchgeführt. Für die Wäsche wurde sowohl entionisiertes (DW) als auch normales Leitungswasser ("BW") verwendet.

Bei einem Großteil der Versuche wurde das bei der Latexkoagulation anfallende Latexserum vor Beginn der Wäsche nicht aus dem Koagulationsbehälter entfernt; d. h. das Latexserum wurde durch Verdünnungswäsche entfernt. Die bei der Krümelwäsche angewandten Rahmenbedingungen (Wasserart, Waschtemperatur, Waschzeit etc.) sind in den nachfolgenden Tabellen aufgelistet.

Die bei der Aufarbeitung der Latices der Nitrilkautschuke A und B jeweils angewandten Bedingungen sind in den Tabellen 3, 4 und 5 zusammengefasst.

In Spalte 4 der Tabellen 3,4 und 5 gibt die Bezeichnung "DW" oder "BW" hinter der Konzentration der Salzlösung

gibt die Art des Wassers an, die zur Herstellung der Salzlösung verwendet wurde.

Tabelle 3: Erfindungsgemäße Beispiele 1-8 (Latexkoagulation mit $MgCl_2$)

| Beispiel | Latexeigenschaften | | Fällbedlngungen | | | | | Waschbedingungen | | |
|---|---|---|---|---|---|---|---|---|---|---|
| | Latex Typ | pH | Salzart | Konz. der Salzlösung [Gew.%] | Salzmenge bez. auf NBR [Gew%] | Temperatur des Latex bei Salzzugabe [°C] | Temperatur der Krümeldispersion nach Erwärmung [°C] | Wasserart | T [°C] | Zeit [h] |
| **1** | B | 9.7 | $MgCl_2$ | 0.8/BW | 8 | 20 | 20 | BW | 20 | 5 |
| **2** | B | 9,7 | $MgCl_2$ | 0,8/BW | 8 | 20 | 20 | DW | 20 | 5 |
| **3** | B | 9,7 | $MgCl_2$ | 1.6/BW | 16 | 20 | 20 | BW | 20 | 5 |
| **4** | A | 8.4 | $MgCl_2$, | 20/DW | 1.9 | 45 | 45 | BW | 60 | 5 |
| **5** | B | 9,7 | $MgCl_2$ | 20/BW | 2,37 | 20 | 45 | BW | 60 | 8 |
| **6** | B | 9,7 | $MgCl_2$ | 20/BW | 2.37 | 20 | 70 | BW | 60 | 8 |
| **7** | B | 9,7 | $MgCl_2$ | 20/BW | 2,37 | 20 | 80 | BW | 60 | 8 |
| **8** | B | 9,7 | $MgCl_2$ | 20/BW | 2,37 | 20 | 90 | BW | 60 | 8 |

Tabelle 4: Nicht erfindungsgemäße Beispiele 9-13 (Latexkoagulation mit $MgCl_2$, aber Temperatur des Latex vor Zugabe der Salz-Lösung bei 60°C)

| Beispiel | Latexeigenschaften | | Fällbedingungen | | | | | Waschbedingungen | | |
|---|---|---|---|---|---|---|---|---|---|---|
| | Typ | pH | Salzart | Konz der Salzlösung [Gew.%] | Salzmenge bez. auf NBR [Gew%] | Temperatur des Latex bei Salzzugabe [°C] | Temperatur der Krümeldispersion nach Erwärmung [°C] | Wasserart | T [°C] | Zeit [h] |
| **9** | A | 8,4 | $MgCl_2$ | 30/DW | 1,9 | 60 | 60 | BW | 60 | 2,5 |
| **10** | A | 8,4 | $MgCl_2$ | 30/DW | 1,9 | 60 | 60 | BW | 20 | 2,5 |
| **11** | A | 8,4 | $MgCl_2$ | 30/DW | 1,9 | 60 | 60 | BW | 20 | 5,0 |
| **12** | A | 8,4 | $MgCl_2$ | 15/DW | 1,9 | 60 | 60 | BW | 45 | 2,5 |
| **13** | B | 9,7 | $MgCl_2$ | 15/DW | 1,9 | 60 | 69 | BW | 45 | 5,0 |

**Tabelle 5: Nicht erfindungsgemäße Beispiele 14-18 (Latexkoagulation mit $CaCl_2$)**

| Beispiel | Latexeigenschaften | | Fällbedingungen | | | | | Waschbedingungen | | |
|---|---|---|---|---|---|---|---|---|---|---|
| | Latex Typ | pH | Salzart | Konz der Salzlösung [Gew.%] | Salzm enge bez auf NBR [Gew. %] | Temperatur des Latex bei Salzzugabe [°C] | Temperatur der Krümeldispersion nach Erwärmung [°C] | Wasserart | T [°C] | Zeit [h] |
| 14 | A | 8,4 | $CaCl_2$ | 0,3 | 3 | 20 | 20 | DW | 20 | 3,8 |
| 15 | A | 8,4 | $CaCl_2$ | 0,6 | 6 | 20 | 20 | DW | 20 | 3,8 |
| 16 | A | 8,4 | $CaCl_2$ | 1,2 | 12 | 20 | 20 | DW | 20 | 3,5 |
| 17 | A | 5,8[1)] | $CaCl_2$ | 1,2 | 12 | 20 | 20 | DW | 20 | 3,4 |

1) Die pH-Einstellung erfolgte am Latex durch Zugabe von HCl vor der Zugabe von $CaCl_2$

Nach Beendigung der Wäsche wurden die Kautschukkrümel mit einem Sieb entnommen und in einer Weldingschnecke auf eine Restfeuchte von 5 bis 15 Gew. % vorentwässert.

Die Endtrocknung der vorentwässerten Kautschukproben erfolgte diskontinuierlich in einem Vakuumktrockenschrank bei 70°C auf eine Restfeuchte von < 1,5 Gew. %.

Für die Bestimmung der Kationengehalte wurden aliquote Teile der Kautschukproben nach DIN 53 568 verascht und mittels Atomabsorptionsspektroskopie nach DIN 51401 bestimmt.

Die Kationengehalte und die Ionenkennzahlen der erfindungsgemäßen bzw. nicht erfindungsgemäßen Nitrilkautschuke aus den Tabellen 3, 4 und 5 sind in den Tabellen 7, 8 und 9 angegeben.

**Tabelle 7: Kationengehalt/Ionenkennzahlen der erfindungsgemäßen NBR aus Tabelle 3**

| Beispiel | Salzart | Kationengehalt | | | | |
|---|---|---|---|---|---|---|
| | | Ca [ppm] | Mg [ppm] | Na [ppm] | K [ppm] | IKZ |
| 1 | $MgCl_2$ | 490 | 98 | 10 | 5 | 48 |
| 2 | $MgCl_2$ | 163 | 164 | 6 | 3 | 32 |
| 3 | $MgCl_2$ | 430 | 136 | 16 | 7 | 48 |
| 4 | $MgCl_2$ | 575 | 57 | 64 | 20 | 47 |
| 5 | $MgCl_2$ | 400 | 83 | 29 | 8 | 39 |
| 6 | $MgCl_2$ | 215 | 101 | 47 | 14 | 26 |
| 7 | $MgCl_2$ | 225 | 107 | 51 | 16 | 28 |
| 8 | $MgCl_2$ | 171 | 111 | 36 | 11 | 25 |

**Tabelle 8: Kationengehalt/Ionenkennzahlen der nicht erfindungsgemäßen NBR aus Tabelle 4**

| Beispiel | Salzart | Kationengehalt | | | | |
|---|---|---|---|---|---|---|
| | | Ca [ppm] | Mg [ppm] | Na [ppm] | K [ppm] | IKZ |
| 9 | $MgCl_2$ | 450 | 245 | 42 | 12 | 62 |
| 10 | $MgCl_2$ | 455 | 270 | 62 | 20 | 65 |
| 11 | $MgCl_2$ | 475 | 220 | 41 | 14 | 61 |
| 12 | $MgCl_2$ | 345 | 440 | 81 | 22 | 77 |
| 13 | $MgCl_2$ | 475 | 365 | 51 | 15 | 79 |

**Tabelle 9: Kationengehalt/Ionenkennzahlen der nicht erfindungsgemäßen NBR aus Tabelle 5**

| Versuch | Salzart | Kationengehalt | | | | |
|---|---|---|---|---|---|---|
| | | Ca [ppm] | Mg [ppm] | Na [ppm] | K [ppm] | IKZ |
| 14 | $CaCl_2$ | 1190 | 6 | 17 | 1 | 89 |
| 15 | $CaCl_2$ | 1290 | 3 | 12 | 1 | 97 |
| 16 | $CaCl_2$ | 1240 | 2 | 6 | 1 | 93 |
| 17 | $CaCl_2$ | 1235 | 2 | 8 | 1 | 93 |

Auf der Basis der in den **Tabellen 3,4 und 5** beschriebenen Nitrilkautschuke wurden in einem 1,5 l Laborinnenmischer gemäß **Tabelle 10** Kautschukmischungen hergestellt, wobei die einzelnen Mischungsbestandteile in der in der Tabelle angegebenen Reihenfolge gemischt wurden. Sämtliche Mischungsbestandteile sind in Gew.-Teilen bezogen auf 100 Gew.-Teile des Nitrilkautschuks angegeben.

**Tabelle 10: Zusammensetzung der Kautschukmischungen**

| Mischungsbestandteile | Menge in Gew.-Teilen |
|---|---|
| NBR | 100,0 |
| Stearinsäure | 2,0 |
| Zinkoxid: | 5,0 |
| Ruß N 330 | 40,0 |
| Phenol/Formaldehyd-Harz (Plastikator® FH) | 5,0 |
| N-Cyclohexyl-benzthiazylsulfenamid (Vulkacit® CZ) | 0,9 |
| Schwefel | 1,5 |

Das Vulkanisationsverhalten der Mischungen wurde im Rheometer bei 160°C nach DIN 53 529 mit Hilfe des Monsantorheometers MDR 2000E bestimmt. Auf diese Weise wurden die charakteristischen Vulkanisationszeiten $t_{10}$ und $t_{90}$ bestimmt.

Nach DIN 53 529, Teil 3 bedeuten:

$t_{10}$: Zeit, bei der 10% des Umsatzes erreicht sind

$t_{90}$: Zeit, bei der 90% des Umsatzes erreicht sind

Die Herstellung der für die weiteren Messungen notwendigen vulkanisierten Prüfkörper erfolgte in der Presse unter einem Hydraulikdruck von 120 bar 30 min bei 160°C vulkanisiert. An den Vulkanisaten wurden mittels Zugversuches nach DIN 53504 der Spannungswert bei 300 % Dehnung ($\sigma_{300}$), die Zugfestigkeit ($\sigma_{max.}$) und die Bruchdehnung ($\varepsilon_b$) bestimmt.

**Tabelle 11: Vulkanisationsverhalten und Vulkanisateigenschaften der erfindungsgemäßen Nitrilkautschuke aus Tabelle 3**

| Beispiel | Salzart | IKZ | Vulkanisation | | | | Vulkanisateigenschaften | | |
|---|---|---|---|---|---|---|---|---|---|
| | | | MS 5 (120°C) [min] | $t_{10}$ [sec] | $t_{90}$ [sec] | $t_{90}$-$t_{10}$ [sec] | $\sigma_{300}$ [MPa] | $\sigma_{max}$ [MPa] | $\varepsilon_b$ [%] |
| 1 | $MgCl_2$ | 48 | 48 | 6.5 | 11.5 | 5,0 | 8,1 | 23,2 | 616 |
| 2 | $MgCl_2$ | 32 | 47 | 6,5 | 11,7 | 5,2 | 8,2 | 22,7 | 600 |
| 3 | $MgCl_2$ | 48 | 47 | 6,5 | 11,7 | 5,2 | 8 | 22,6 | 612 |
| 4 | $MgCl_2$ | 47 | 46 | 7 | 11,9 | 4,9 | 7,8 | 22,1 | 610 |
| 5 | $MgCl_2$ | 39 | 46 | 7,3 | 12,2 | 4,9 | 8,2 | 21,7 | 576 |
| 6 | $MgCl_2$ | 26 | 43 | 7,1 | 11,9 | 4,8 | 8,6 | 23,4 | 595 |
| 7 | $MgCl_2$ | 28 | 41 | 6,6 | 11,5 | 4,9 | 8,7 | 23,1 | 577 |
| 8 | $MgCl_2$ | 25 | 42 | 6,9 | 12,2 | 5,3 | 8,8 | 20,8 | 538 |

**Tabelle 12: Vulkanisationsverhalten und Vulkanisateigenschaften der nicht erfindungsgemäßen Nitrilkautschuke aus Tabelle 4**

| Versuch | Salzart | IKZ | Vulkanisation | | | | Vulkanisateigenschaften | | |
|---|---|---|---|---|---|---|---|---|---|
| | | | MS 5 (120°C) [min] | $t_{10}$ [sec] | $t_{90}$ [sec] | $t_{90}$-$t_{10}$ [sec] | $\sigma_{300}$ [MPa] | $\sigma_{max.}$ [MPa] | $\varepsilon_b$ [%] |
| 9 | $MgCl_2$ | 62 | 52 | 7,9 | 14,2 | 6,3 | 7,4 | 22,0 | 622 |

(fortgesetzt)

| Versuch | Salzart | IKZ | Vulkanisation | | | | Vulkanisateigenschaften | | |
|---|---|---|---|---|---|---|---|---|---|
| | | | MS 5 (120°C) [min] | $t_{10}$ [sec] | $t_{90}$ [sec] | $t_{90}$-$t_{10}$ [sec] | $\sigma_{300}$ [MPa] | $\sigma_{max.}$ [MPa] | $\varepsilon_b$ [%] |
| 10 | $MgCl_2$ | 65 | 54 | 7,9 | 14,1 | 6,2 | 7,3 | 21,8 | 627 |
| 11 | $MgCl_2$ | 61 | 53 | 7,5 | 14,5 | 7,0 | 7,3 | 21,3 | 621 |
| 12 | $MgCl_2$ | 77 | 54 | 8,5 | 15,1 | 6,6 | 6,9 | 23,0 | 666 |
| 13 | $MgCl_2$ | 79 | 54 | 7,8 | 14,6 | 6.8 | 7,1 | 22,1 | 641 |

**Tabelle 13: Vulkanisationsverhalten und Vulkanisateigenschaften der nicht erfindungsgemäßen Nitrilkautschuke aus Tabelle 5**

| Beispiel | Salzart | IKZ | Vulkanisation | | | | Vulkanisateigenschaften | | |
|---|---|---|---|---|---|---|---|---|---|
| | | | MS 5 (120°C ) [min] | $t_{10}$ [sec] | $t_{90}$ [sec] | $t_{90}$-$t_{10}$ [sec] | $\sigma_{300}$ [MPa] | $\sigma_{max.}$ [MPa] | $\varepsilon_b$ [%] |
| 14 | $CaCl_2$ | 89 | 56 | 7,1 | 14,7 | 7,6 | 7,4 | 21,0 | 608 |
| 15 | $CaCl_2$ | 97 | 59 | 8.2 | 16,7 | 8,5 | 7,1 | 21,5 | 649 |
| 16 | $CaCl_2$ | 93 | 56 | 8,0 | 18,2 | 10,2 | 7,1 | 21,6 | 648 |
| 17 | $CaCl_2$ | 93 | 62 | 8,7 | 17,6 | 8,9 | 7,0 | 21,6 | 651 |

**In den Tabellen 11, 12** und **13** wird gezeigt, dass der Mooneyscorch, die Vulkanisationsgeschwindigkeit ($t_{90}$-$t_{10}$) und die Vulkanisateigenschaften, insbesondere der Spannungswert bei 300% Dehnung ($\sigma_{300}$) essentiell von der Konzentration und dem relativen Verhältnis der Kationen im Nitrilkautschuk abhängen. Die Eigenschaften der Nitrilkautschuke wird durch die Ionenkennzahl und den Magnesium-Gehalt bestimmt. Es wird gezeigt, dass die erfindungsgemäßen, mit Magnesiumchlorid koagulierten NBR-Latices einen niedrigeren Mooneyscorch, kürzere Vulkanisationszeiten sowie höhere Spannungswerte bei 300% Dehnung aufweisen als nicht erfindungsgemäße Nitrilkautschuke.

## Patentansprüche

1. Nitrilkautschuk, der Wiederholungseinheiten mindestens eines α,β-ungesättigten Nitrils, mindestens eines konjugierten Diens und gegebenenfalls eines oder mehrerer weiterer copolymerisierbarer Monomere enthält und der eine Ionenkennzahl ("IKZ") der allgemeinen Formel (I) im Bereich von 0 bis 60 ppm x mol/g besitzt,

$$IKZ = 3\left[\frac{c(Ca^{2+})}{40\ g/mol} + \frac{c(Mg^{2+})}{24\ g/mol}\right] - \left[\frac{c(Na^{+})}{23\ g/mol} + \frac{c(K^{+})}{39\ g/mol}\right] \quad (I)$$

wobei $c(Ca^{2+})$, $c(Mg^{2+})$, $c(Na^{+})$ und $c(K^{+})$ die Konzentration der Calcium-, Magnesium-, Natrium- und Kalium-Ionen im Nitrilkautschuk in ppm angibt und die Konzentration der Magnesiun-Ionen $c(Mg^{2+})$ im Bereich von 50 bis 250 ppm liegt.

2. Nitrilkautschuk gemäß Anspruch 1 mit einer Ionenkennzahl im Bereich von 10 bis 55 ppm x mol/g und bevorzugt im Bereich von 10 bis 50 ppm x mol/g.

3. Nitrilkautschuk gemäß Anspruch 1 oder 2, der Wiederholungseinheiten von Acrylnitril, 1,3-Butadien und gegebenenfalls von einem oder mehreren weiteren copolymerisierbaren Monomeren enthält.

**4.** Nitrilkautschuk gemäß Anspruch 3, der Wiederholungseinheiten von einer oder mehreren α,β-ungesättigten Mono- oder Dicarbonsäuren, deren Estern oder Amiden aufweist, bevorzugt Wiederholungseinheiten eines Alkylesters einer α,β-ungesättigten Carbonsäuren, insbesondere von Methyl(meth)acrylat, Ethyl(meth)acrylat, Propyl(meth) acrylat, n-Butyl(meth)acrylat, t-Butyl(meth)acrylat, Hexyl(meth)acrylat, 2-Ethlyhexyl(meth)acrylat, Octyl(meth)acrylat oder Lauryl(meth)acrylat..

**5.** Nitrilkautschuk gemäß einem oder mehreren der Ansprüche 1 bis 4, der eine Mooney-Viskosität (ML (1+4 @100°C)) von 10 bis 150, vorzugsweise von 20 bis 100 Mooneyeinheiten aufweist.

**6.** Nitrilkautschuk gemäß einem oder mehreren der Ansprüche 1 bis 5 mit einer Glastemperatur im Bereich von -70°C bis +10°C, vorzugsweise im Bereich von -60°C bis 0°C.

**7.** Verfahren zur Herstellung von Nitrilkautschuken durch Emulsionspolymerisation mindestens eines α,β-ungesättigten Nitrils, mindestens eines konjugierten Diens und gegebenenfalls eines oder mehrerer weiterer copolymerisierbarer Monomere, wobei der bei der Polymerisation zunächst anfallende, den Nitrilkautschuk enthaltende Latex einer Koagulation unterworfen und der erhaltene koagulierte Nitrilkautschuk anschließend gewaschen wird, **dadurch gekennzeichnet, dass**

(i) die Emulsionspolymerisation in Gegenwart mindestens eines Alkylthiols durchgeführt wird, welches 12-16 Kohlenstoffatome und mindestens drei tertiäre Kohlenstoffatomen enthält, wobei der Schwefel an eines dieser tertiären Kohlenstoffatome gebunden ist,
(ii) der bei der Emulsionspolymerisation erhaltene Latex vor der Koagulation auf einen pH-Wert von mindestens 6 eingestellt, die Latexkoagulation unter Einsatz mindestens eines Magnesium-Salzes durchgeführt wird und der Latex vor der Zugabe des Magnesium-Salzes auf eine Temperatur kleiner 45°C eingestellt wird, wobei neben dem Einsatz mindestens eines Magnesium-Salzes zur Koagulation ferner bis zu 5 Gew.-% einer oder mehrerer anderer Salze eines oder mehrerer anderer zweiwertiger Metalle, bezogen auf die gesamte Menge aller zur Koagulation eingesetzten Salze, verwendet werden können, und es darüber hinaus möglich ist, bis zu X Gew.-% eines Salzes eines einwertigen Metalls, bezogen auf die gesamte Menge aller zur Koagulation eingesetzten Salze zu verwenden, wobei sich X Gew.-% ergeben als 50 Gew.-% abzüglich der Gew.-% Menge eines oder mehrerer anderer Salze eines oder mehrerer anderer zweiwertiger Metalle, sofern vorhanden.

**8.** Verfahren gemäß Anspruch 7, wobei die Emulsionspolymerisation diskontinuierlich oder kontinuierlich in einer Rührkesselkaskade durchgeführt wird.

**9.** Verfahren gemäß Anspruch 7 oder 8, wobei dem den Nitrilkautschuk enthaltenden Latex vor oder während der Koagulation ein oder mehrere Alterungsschutzmittel zugesetzt werden.

**10.** Verfahren gemäß einem oder mehreren der Ansprüche 7 bis 9, wobei für die Latexkoagulation Magnesiumchlorid, Magnesiumsulfat und/oder Magnesiumnitrat eingesetzt wird.

**11.** Verfahren gemäß einem oder mehreren der Ansprüche 7 bis 10, worin für die Latexkoagulation 0,1 bis 10 Gew. %, vorzugsweise 0,5 bis 5 Gew. % mindestens eines Magnesium-Salzes bezogen auf Nitrilkautschuk eingesetzt werden.

**12.** Verfahren gemäß einem oder mehreren der Ansprüche 7 bis 11, worin für die Latexkoagulation gerade solche Mengen mindestens eines Magnesium-Salzes verwendet werden, die zur vollständigen Koagulation des Nitrilkautschuks benötigt werden.

**13.** Verfahren gemäß einem oder mehreren der Ansprüche 7 bis 12, wobei die Konzentration der Lösung von mindestens einem Magnesium-Salz, bevorzugt der Magnesiumchloridlösung, 0,1 bis 35 Gew. %, vorzugsweise 0,5 bis 30 Gew. % beträgt..

**14.** Verfahren gemäß einem oder mehreren der Ansprüche 7 bis 13, wobei der zur Koagulation eingesetzte Latex eine Feststoffkonzentration im Bereich von 1 % bis 40 %, vorzugsweise im Bereich von 5 % bis 35 % und besonders bevorzugt im Bereich von 15 bis 30 Gew. % besitzt.

**15.** Verfahren gemäß einem oder mehreren der Ansprüche 7 bis 14, wobei der Latex nach der Zugabe der Lösung mindestens eines Magnesium-Salzes auf eine Temperatur von bis zu 100°C, bevorzugt auf eine Temperatur im Bereich von 50 bis 90°C erwärmt wird.

16. Verfahren gemäß einem oder mehreren der Ansprüche 7 bis 15, wobei für die Wäsche des koagulierten Nitrilkautschuks deionisiertes Wasser ("DW") oder nicht entionisiertes Wasser ("BW") eingesetzt werden, bevorzugt nicht entionisiertes Wasser, sofern bei der Koagulation des Latex mit mindestens einem Magnesium-Salz kein Calcium-Salz im möglichen Mengenbereich von bis zu 5 Gew.% aller eingesetzten Salze anwesend ist.

17. Verfahren gemäß einem oder mehreren der Ansprüche 7 bis 16, wobei die Wäsche des koagulierten Nitrilkautschuks bei einer Temperatur im Bereich von 15 bis 90°C und bevorzugt bei einer Temperatur im Bereich von 45 bis 70°C durchgeführt wird.

18. Verfahren gemäß einem oder mehreren der Ansprüche 7 bis 16, wobei der erhaltene Nitrilkautschuk anschließend (i) entweder nur einer Metathese-Reaktion oder (ii) einer Metathese-Reaktion und einer nachfolgenden Hydrierung oder (iii) nur einer Hydrierung unterzogen wird.

19. Optional hydrierte Nitrilkautschuke erhältlich gemäß dem Verfahren nach Anspruch 18.

20. Verwendung der Nitrilkautschuke gemäß einem oder mehreren der Ansprüche 1 bis 6 oder gemäß Anspruch 19 zur Herstellung von vulkanisierbaren Mischungen.

21. Vulkanisierbare Mischung enthaltend mindestens einen Nitrilkautschuk gemäß einem oder mehreren der Ansprüche 1 bis 6 oder gemäß Anspruch 19, mindestens einen Vernetzer und gegebenenfalls weitere Additive.

22. Verfahren zur Herstellung einer vulkanisierbaren Mischung gemäße Anspruch 21, indem man mindestens einen Nitrilkautschuk gemäß einem oder mehreren der Ansprüche 1 bis 6 oder gemäß Anspruch 19, mindestens einen Vernetzer und gegebenenfalls weitere Additive mischt.

23. Verfahren zur Herstellung von Formteilen auf Basis eines Nitrilkautschuks gemäß einem oder mehreren der Ansprüche 1 bis 6 oder gemäß Anspruch 21, indem man eine vulkanisierbare Mischung gemäß Anspruch 21 in einem Formgebungsverfahren, bevorzugt unter Anwendung eines Spritzgussverfahrens, vulkanisiert.

24. Formteil erhältlich gemäß dem Verfahren nach Anspruch 23.

25. Formteil gemäß Anspruch 24, **dadurch gekennzeichnet, dass** es sich um eine Dichtung, eine Kappe, einen Schlauch oder eine Membran handelt, insbesondere um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch oder eine Pumpenmembran.

## Claims

1. Nitrile rubber which contains repeating units of at least one $\alpha,\beta$-unsaturated nitrile, at least one conjugated diene and optionally one or more further copolymerizable monomers and has an ion index ("II") according to the general formula (I) in the range from 0 to 60 ppm x mol/g,

$$IKZ = 3\left[\frac{c(Ca^{2+})}{40\ g/mol} + \frac{c(Mg^{2+})}{24\ g/mol}\right] - \left[\frac{c(Na^{+})}{23\ g/mol} + \frac{c(K^{+})}{39\ g/mol}\right] \quad (I)$$

IKZ=II

where $c(Ca^{2+})$, $c(Mg^{2+})$, $c(Na^{+})$ and $c(K^{+})$ indicate the concentrations of the calcium, magnesium, sodium and potassium ions in the nitrile rubber in ppm and the concentration of magnesium ions $c(Mg^{2+})$ is in the range from 50 to 250 ppm.

2. Nitrile rubber according to Claim 1 having an ion index in the range from 10 to 55 ppm x mol/g and preferably in the range from 10 to 50 ppm x g/mol.

3. Nitrile rubber according to Claim 1 or 2 containing repeating units of acrylonitrile, 1,3-butadiene and optionally one

or more further copolymerizable monomers.

4. Nitrile rubber according to Claim 3 having repeating units of one or more α,β-unsaturated monocarboxylic or dicarboxylic acids, their esters or amides, preferably repeating units of an alkyl ester of an α,β-unsaturated carboxylic acid, in particular methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate or lauryl (meth)acrylate.

5. Nitrile rubber according to one or more of Claims 1 to 4 which has a Mooney viscosity (ML (1+4 @100°C)) of from 10 to 150 Mooney units, preferably from 20 to 100 Mooney units.

6. Nitrile rubber according to one or more of Claims 1 to 5 having a glass transition temperature in the range from -70°C to +10°C, preferably in the range from -60°C to 0°C.

7. Process for producing nitrile rubbers by emulsion polymerization of at least one α,β-unsaturated nitrile, at least one conjugated diene and optionally one or more further copolymerizable monomers, with the latex which is initially obtained in the polymerization and contains the nitrile rubber being subjected to coagulation and the coagulated nitrile rubber obtained subsequently being washed, **characterized in that**

(i) the emulsion polymerization is carried out in the presence of at least one alkyl thiol containing 12-16 carbon atoms and at least three tertiary carbon atoms, with the sulphur being bound to one of these tertiary carbon atoms, and
(ii) the pH of the latex obtained in the emulsion polymerization is set to at least 6 before coagulation, the coagulation of the latex is carried out using at least one magnesium salt and the temperature of the latex is set to a value below 45°C before addition of the magnesium salt, where not only at least one magnesium salt but additionally up to 5% by weight of one or more other salts or one or more other divalent metals, based on the total amount of all salts used for the coagulation, can be used and it is also possible to use up to X% by weight of a salt of a monovalent metal, based on the total amount of all salts used for the coagulation, where X% by weight is given by 50% by weight minus the per cent by weight of one or more other salts of one or more other divalent metals, if present.

8. Process according to Claim 7, wherein the emulsion polymerization is carried out batchwise or continuously in a cascade of stirred vessels.

9. Process according to Claim 7 or 8, wherein one or more ageing inhibitors are added to the latex containing the nitrile rubber before or during coagulation.

10. Process according to one or more of Claims 7 to 9, wherein magnesium chloride, magnesium sulphate and/or magnesium nitrate are/is used for coagulation of the latex.

11. Process according to one or more of Claims 7 to 10, wherein from 0.1 to 10% by weight, preferably from 0.5 to 5% by weight, of at least one magnesium salt, based on nitrile rubber, is used for coagulation of the latex.

12. Process according to one or more of Claims 7 to 11, wherein just those amounts of magnesium salt which are required for complete coagulation of the nitrile rubber are used for coagulation of the latex.

13. Process according to one or more of Claims 7 to 12, wherein the concentration of the solution of at least one magnesium salt, preferably the magnesium chloride solution, is from 0.1 to 35% by weight, preferably from 0.5 to 30% by weight.

14. Process according to one or more of Claims 7 to 13, wherein the latex used for the coagulation has a solids concentration in the range from 1% to 40%, preferably in the range from 5% to 35% and particularly preferably in the range from 15 to 30% by weight.

15. Process according to one or more of Claims 7 to 14, wherein the latex is heated to a temperature of up to 100°C, preferably a temperature in the range from 50 to 90°C, after addition of the solution of at least one magnesium salt.

16. Process according to one or more of Claims 7 to 15, wherein deionized water ("DW") or water which has not been deionized ("BW") is used for washing of the coagulated nitrile rubber, preferably water which has not been deionized

if no calcium salt is present in the possible amounts of up to 5% by weight of all salts used in the coagulation of the latex using at least one magnesium salt.

**17.** Process according to one or more of Claims 7 to 16, wherein the washing of the coagulated nitrile rubber is carried out at a temperature in the range from 15 to 90°C, preferably at a temperature in the range from 45 to 70°C.

**18.** Process according to one or more of Claims 7 to 16, wherein the nitrile rubber obtained is subsequently subjected to either (i) only a metathesis reaction or (ii) a metathesis reaction and a subsequent hydrogenation or (iii) only a hydrogenation.

**19.** Optionally hydrogenated nitrile rubbers which can be obtained by the process according to Claim 18.

**20.** Use of the nitrile rubbers according to one or more of Claims 1 to 6 or according to Claim 19 for producing vulcanizable mixtures.

**21.** Vulcanizable mixture containing at least one nitrile rubber according to one or more of Claims 1 to 6 or according to Claim 19, at least one crosslinker and optionally further additives.

**22.** Process for producing a vulcanizable mixture according to Claim 21 by mixing at least one nitrile rubber according to one or more of Claims 1 to 6 or according to Claim 19, at least one crosslinker and optionally further additives.

**23.** Process for producing mouldings based on a nitrile rubber according to one or more of Claims 1 to 6 or according to Claim 21, wherein a vulcanizable mixture according to Claim 21 is vulcanized in a shaping process, preferably using an injection moulding process.

**24.** Moulding obtainable by the process according to Claim 23.

**25.** Moulding according to Claim 24, **characterized in that** it is a seal, a cap, a hose or a diaphragm, in particular an O-ring seal, a flat seal, a corrugated sealing ring, a sealing sleeve, a sealing cap, a dust protection cap, a plug seal, a thermal insulation hose (with or without addition of PVC), an oil cooler hose, an air intake hose, a servo control hose or a pump diaphragm.

## Revendications

**1.** Caoutchouc nitrile, qui contient des unités de répétition d'au moins un nitrile α,β-insaturé, d'au moins un diène conjugué et éventuellement d'un ou de plusieurs monomères copolymérisables supplémentaires, et qui présente un indice ionique (IKZ) de formule générale (I) dans la plage allant de 0 à 60 ppm x mol/g,

$$IKZ = 3\left[\frac{c(Ca^{2+})}{40\ g/mol} + \frac{c(Mg^{2+})}{24\ g/mol}\right] - \left[\frac{c(Na^{+})}{23\ g/mol} + \frac{c(K^{+})}{39\ g/mol}\right] \quad (I)$$

$c(Ca^{2+})$, $C(Mg^{2+})$, $c(Na^{+})$ et $c(K^{+})$ indiquant la concentration des ions calcium, magnésium, sodium et potassium dans le caoutchouc nitrile en ppm et la concentration des ions magnésium $c(Mg^{2+})$ se trouvant dans la plage allant de 50 à 250 ppm.

**2.** Caoutchouc nitrile selon la revendication 1, ayant un indice ionique dans la plage allant de 10 à 55 ppm x g/mol et de préférence dans la plage allant de 10 à 50 ppm x g/mol.

**3.** Caoutchouc nitrile selon la revendication 1 ou 2, qui contient des unités de répétition d'acrylonitrile, de 1,3-butadiène et éventuellement d'un ou de plusieurs monomères copolymérisables supplémentaires.

**4.** Caoutchouc nitrile selon la revendication 3, qui comporte des unités de répétition d'un ou de plusieurs acides mono- ou dicarboxyliques α,β-insaturés, leurs esters ou amides, de préférence des unités de répétition d'un ester alkylique d'un acide carboxylique α,β-insaturé, notamment de (méth)acrylate de méthyle, de (méth)acrylate d'éthyle, de (méth)acrylate de propyle, de (méth)acrylate de n-butyle, de (méth)acrylate de t-butyle, de (méth)acrylate d'hexyle,

de (méth)acrylate de 2-éthylhexyle, de (méth)acrylate d'octyle ou de (méth)acrylate de lauryle.

5. Caoutchouc nitrile selon une ou plusieurs des revendications 1 à 4, qui présente une viscosité de Mooney (ML (1+4 à 100 °C)) de 10 à 150, de préférence de 20 à 100 unités Mooney.

6. Caoutchouc nitrile selon une ou plusieurs des revendications 1 à 5, ayant une température de transition vitreuse dans la plage allant de -70 °C à +10 °C, de préférence dans la plage allant de -60 °C à 0 °C.

7. Procédé de fabrication de caoutchoucs nitriles par polymérisation en émulsion d'au moins un nitrile α, β-insaturé, d'au moins un diène conjugué et éventuellement d'un ou de plusieurs monomères copolymérisables supplémentaires, le latex contenant le caoutchouc nitrile qui se forme tout d'abord lors de la polymérisation étant soumis à une coagulation et le caoutchouc nitrile coagulé obtenu étant ensuite lavé, **caractérisé en ce que**

(i) la polymérisation en émulsion est réalisée en présence d'au moins un alkylthiol qui contient 12 à 16 atomes de carbone et au moins trois atomes de carbone tertiaires, le soufre étant relié à un de ces atomes de carbone tertiaires,
(ii) le latex obtenu lors de la polymérisation en émulsion est ajusté à un pH d'au moins 6 avant la coagulation, la coagulation du latex est réalisée en utilisant au moins un sel de magnésium et le latex est ajusté à une température inférieure à 45 °C avant l'ajout du sel de magnésium, jusqu'à 5 % en poids d'un ou de plusieurs autres sels d'un ou de plusieurs autres métaux bivalents, par rapport à la quantité totale de tous les sels utilisés pour la coagulation, pouvant également être utilisés en plus de l'utilisation d'au moins un sel de magnésium pour la coagulation, et il est également possible d'utiliser jusqu'à X % en poids d'un sel d'un métal monovalent, par rapport à la quantité totale de tous les sels utilisés pour la coagulation, X % en poids étant donné par 50 % en poids moins la quantité en % en poids d'un ou de plusieurs autres sels d'un ou de plusieurs autres métaux bivalents, pour autant que ceux-ci soient présents.

8. Procédé selon la revendication 7, dans lequel la polymérisation en émulsion est réalisée de manière discontinue ou continue dans une cascade de cuves agitées.

9. Procédé selon la revendication 7 ou 8, dans lequel un ou plusieurs agents antivieillissement sont ajoutés au latex contenant le caoutchouc nitrile avant ou pendant la coagulation.

10. Procédé selon une ou plusieurs des revendications 7 à 9, dans lequel du chlorure de magnésium, du sulfate de magnésium et/ou du nitrate de magnésium sont utilisés pour la coagulation du latex.

11. Procédé selon une ou plusieurs des revendications 7 à 10, dans lequel 0,1 à 10 % en poids, de préférence 0,5 à 5 % en poids, d'au moins un sel de magnésium, par rapport au caoutchouc nitrile, sont utilisés pour la coagulation du latex.

12. Procédé selon une ou plusieurs des revendications 7 à 11, dans lequel des quantités d'au moins un sel de magnésium exactement telles que nécessaires pour la coagulation complète du caoutchouc nitrile sont utilisées pour la coagulation du latex.

13. Procédé selon une ou plusieurs des revendications 7 à 12, dans lequel la concentration de la solution d'au moins un sel de magnésium, de préférence de la solution de chlorure de magnésium, est de 0,1 à 35 % en poids, de préférence de 0,5 à 30 % en poids.

14. Procédé selon une ou plusieurs des revendications 7 à 13, dans lequel le latex utilisé pour la coagulation présente une concentration de solides dans la plage allant de 1 % à 40 %, de préférence dans la plage allant de 5 % à 35 % et de manière particulièrement préférée dans la plage allant de 15 à 30 % en poids.

15. Procédé selon une ou plusieurs des revendications 7 à 14, dans lequel le latex est porté à une température de jusqu'à 100 °C, de préférence à une température dans la plage allant de 50 à 90 °C, après l'ajout de la solution d'au moins un sel de magnésium.

16. Procédé selon une ou plusieurs des revendications 7 à 15, dans lequel de l'eau déionisée (DW) ou de l'eau non déionisée (BW) est utilisée pour le lavage du caoutchouc nitrile coagulé, de préférence de l'eau non déionisée, dans la mesure où lors de la coagulation du latex avec au moins un sel de magnésium, aucun sel de calcium n'est présent

dans la plage de quantité possible allant jusqu'à 5 % en poids de tous les sels utilisés.

**17.** Procédé selon une ou plusieurs des revendications 7 à 16, dans lequel le lavage du caoutchouc nitrile coagulé est réalisé à une température dans la plage allant de 15 à 90 °C et de préférence à une température dans la plage allant de 45 à 70 °C.

**18.** Procédé selon une ou plusieurs des revendications 7 à 16, dans lequel le caoutchouc nitrile obtenu est ensuite soumis soit à (i) uniquement une réaction de métathèse, soit à (ii) une réaction de métathèse et une hydrogénation ultérieure, soit à (iii) uniquement une hydrogénation.

**19.** Caoutchoucs nitriles éventuellement hydrogénés, pouvant être obtenus par le procédé selon la revendication 18.

**20.** Utilisation des caoutchoucs nitriles selon une ou plusieurs des revendications 1 à 6 ou selon la revendication 19 pour la fabrication de mélanges vulcanisables.

**21.** Mélange vulcanisable contenant au moins un caoutchouc nitrile selon une ou plusieurs des revendications 1 à 6 ou selon la revendication 19, au moins un agent de réticulation et éventuellement des additifs supplémentaires.

**22.** Procédé de fabrication d'un mélange vulcanisable selon la revendication 21, selon lequel au moins un caoutchouc nitrile selon une ou plusieurs des revendications 1 à 6 ou selon la revendication 19, au moins un agent de réticulation et éventuellement des additifs supplémentaires sont mélangés.

**23.** Procédé de fabrication de pièces moulées à base d'un caoutchouc nitrile selon une ou plusieurs des revendications 1 à 6 ou selon la revendication 21, selon lequel un mélange vulcanisable selon la revendication 21 est vulcanisé lors d'un procédé de façonnage, de préférence en utilisant un procédé de moulage par injection.

**24.** Pièce moulée, pouvant être obtenue par le procédé selon la revendication 23.

**25.** Pièce moulée selon la revendication 24, **caractérisée en ce qu'**il s'agit d'un joint, d'un bouchon, d'un tube ou d'une membrane, notamment d'un joint torique, d'un joint plat, d'une bague d'étanchéité pour arbre, d'un manchon d'étanchéité, d'un bouchon d'étanchéité, d'un revêtement anti-poussière, d'un joint pour connecteur, d'un tube thermo-isolant (avec et sans ajout de PVC), d'un tube de refroidisseur d'huile, d'un tube d'aspiration d'air, d'un tube de servocommande ou d'une membrane de pompe.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DD 154702
- JP 2790273 A
- WO 6932322 A
- DE OS2332096 A
- DE OS2425441 A
- DE OS2751786 A
- DE OS3043688 A
- US 4920176 A
- EP 1369436 A
- EP 0692496 A
- EP 0779301 A
- EP 0779300 A
- EP 779300 A
- JP 7316126 A
- JP 7316127 A
- JP 7316128 A
- GB 823823 A
- GB 823824 A
- US 4826721 A
- WO 02100941 A
- WO 02100905 A
- US 3700637 A
- DE 2539132 A
- EP 0134023 A
- DE OS3541689 A
- DE OS3540918 A
- EP 0298386 A
- DE OS3529252 A
- DE OS3433392 A
- US 4464515 A
- US 4503196 A
- EP 0471250 A
- US 4631315 A
- US 6683136 A


### In der Beschreibung aufgeführte Nicht-Patentliteratur


- **W. Hofmann.** *Rubber Chem. Technol.,* 1963, vol. 36, 1
- Ullmann's Encyclopedia of Industrial Chemistry. VCH Verlagsgesellschaft, 1993, 255-261
- *Kolloid-Z.,* 1957, vol. 154, 154
- **Houben-Weyl.** *Methoden der Org. Chemie, Makromolekulare Stoffe,* 1961, vol. 1, 484
- **Houben-Weyl.** Methoden der Org. Chemie. *Makromolekulare Stoffe,* 1961, vol. 1, 479
- **Houben-Weyl.** Methoden der Org. Chemie. *Makromolekulare Stoffe,* 1961, vol. 1, 484, 485
- **B. Welz.** Atomic Absorption Spectrometry. Verlag Chemie, 1985
- Ullmaan's Encyclopedia of Industrial Chemistry. vol. 31, 345-355
- Ullmann's Encyclopedia of Industrial Chemistry. vol. 13, 75-108